(19) Europäisches Patentamt
European Patent Office
Office européen des brevets

(11) **EP 4 787 760 A1**

(12) **EUROPEAN PATENT APPLICATION**

(43) Date of publication:
**05.08.2026 Bulletin 2026/32**

(21) Application number: **25305152.8**

(22) Date of filing: **03.02.2025**

(51) International Patent Classification (IPC):
**H04L 5/00** *(2006.01)* **H04L 25/02** *(2006.01)*
**H04L 27/26** *(2006.01)*

(52) Cooperative Patent Classification (CPC):
**H04L 27/26134; H04L 5/0048; H04L 25/0226**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
**1119 NS Schiphol Rijk Amsterdam (NL)**
Designated Contracting States:
**FR**

• **MITSUBISHI ELECTRIC CORPORATION**
**Chiyoda-ku**
**Tokyo 100-8310 (JP)**

(72) Inventors:
• **CORLAY, Vincent**
**35708 RENNES CEDEX 7 (FR)**
• **CIOCHINA, Cristina**
**35000 RENNES (FR)**
• **SIBEL, Jean-Christophe**
**35708 RENNES CEDEX 7 (FR)**

(74) Representative: **Plasseraud IP**
**104 Rue de Richelieu**
**CS92104**
**75080 Paris Cedex 02 (FR)**

(54) **NON-UNIFORM LOW OVERHEAD REFERENCE SIGNAL PATTERNS**

(57) The invention relates to a method, implemented by computer means of a telecommunication device , for inserting reference signals, said telecommunication device comprising a modulator, said method comprising: obtaining a sequence of signal samples, by inserting reference signals according to at least one reference signal pattern within a sequence of data samples ; feeding said modulator with signal blocks obtained from said sequence of signal samples wherein: the positions, in said sequence of signal samples, of the reference signals inserted according to each of said at least one reference signal pattern are a proper subset of a finite arithmetic progression ; said proper subset comprises at least three terms of the finite arithmetic progression, said at least three terms comprising the initial term of the finite arithmetic progression, and the final term of the finite arithmetic progression.

FIG. 5

## Description

### Technical Field

The present disclosure relates to the field of wireless communications. More specifically, it relates to the field of the insertion of reference signal patterns.

### Background Art

In wireless communication systems, the signal received at the receiver side is usually different from the signal sent by the transmitter. This is because the signal is impaired by the communication channel between the emitter and the receiver.

The purpose of reference signal (RS) insertion in wireless communication systems is to facilitate the estimation and correction of various channel impairments that affect the transmitted signals. Reference signals, also known as pilot signals, are predefined signals inserted into the transmitted data stream at known positions. These signals serve several key purposes, non limitatively including:

- Channel estimation: reference signals are used to estimate the characteristics of the communication channel, such as fading, attenuation, phase noise and phase shifts. By comparing the received reference signals with the known transmitted reference signals, the receiver can determine how the channel has affected the signal and apply the necessary corrections to the received data. This estimation allows for the correction of the impairments due to channel characteristics, improving the overall received signal quality ;

- Synchronization: reference signals assist in achieving time and frequency synchronization between the transmitter and receiver. They help the receiver align its timing with the incoming signal and adjust for any frequency offsets ;

- Signal quality monitoring: Reference signals provide a means to monitor the quality of the communication link. By analyzing the reference signals, the system can assess the signal-to-noise ratio (SNR) and other quality metrics, which can be used for adaptive modulation and coding scheme.

In the present disclosure, a reference signal insertion pattern refers to position for inserting RS in a signal to be transmitted in a communication system. RS insertion is not restricted to a specific type of compensation based on the inserted RS, neither to a specific waveform. RS insertion may apply for example to:

• Insertion in the frequency domain (per subcarrier) of RS in an OFDM system ;

• Insertion in time or frequency or delay or Doppler domain in an OFDM based system with or without precoding:

  • pre-DFT or post-DFT insertion in a DFT-precoded OFDM system ;
  • Pre- or post- precoding insertion in an OTFS system ;

• Insertion in e.g. time domain in a single-carrier system or in a CDMA system.

Depending on the RS insertion pattern, insertion domain, waveform, carrier frequency etc, the inserted RS can be used for many different purposes such as estimating channel characteristics, or phase noise statistical characteristics, for dynamic channel estimation, for phase noise estimation, for non-linear distortion compensation, for intermodulation reduction, etc.

Regular reference signal patterns (insertion positions) are largely used because they are easy to implement and are easy to process with usual signal processing algorithms.

For example, for discovering and estimating effects that occur during the transmission, estimation methods often rely on the knowledge of long-terms statistics, of auto-correlation properties or equivalently of power spectral density (PSD). For example, good knowledge of the PSD of the phase noise caused by hardware effects during the communication allows to efficiently compensate the phase noise effects, via the use e.g., of a Wiener filter. Such PSD is specific to a couple transmitter-receiver and needs specific pilots for the long-terms statistics discovery. This is especially true at very high frequencies where such phase noise effects are important.

The requirements for an accurate estimation of the long-term statistics of phase noise, or other characteristics of the transmission channel, will become even more important in the future, because the phase noise increases as the carrier frequency used to exchange radiofrequency signals increases. Next generation wireless communication systems target sub-terahertz carrier frequencies (e.g. below 300 gigahertz) and terahertz (THz) carrier frequencies (~1000 gigahertz) that are greater than the carrier frequencies used in current wireless communication systems. This increase in the carrier frequencies opens the room for considering higher data rates.

However, the constructors of the physical devices cannot keep up the pace with the wireless technology because the inner materials are not robust enough against the increase in the carrier frequency and it takes much time and much money to provide well-suited materials. The phase noise is therefore expected to drastically increase for next generation wireless communication systems.

This might require increasing the number of reference signals required for an estimation of long-term characteristics of the transmission channel, thereby limiting the achievable data rate for data signals. Indeed, the discovery of the autocorrelation needs a sufficient number of observations to propose a reliable estimate of the autocorrelation. This raises the aforementioned need for carefully consider the tradeoff between the reference signal density and the system performance.

The same problem arises for other uses of insertion of reference signals, wherein future wireless communication system may require inserting more reference signals for channel estimation, phase noise mitigation, synchronization, etc.

There is therefore a need for inserting reference signals using a limited amount of reference signals for a given use of the reference signal insertion .

**Summary**

This disclosure improves the situation.

It is proposed a method for inserting reference signals implemented by computer means of a telecommunication device, said telecommunication device comprising a modulator, said method comprising:

- obtaining a sequence of signal samples, by inserting reference signals according to at least one reference signal pattern within a sequence of data samples ;

- feeding said modulator with signal blocks obtained from said sequence of signal samples ;

wherein:

- the positions, in said sequence of signal samples, of the reference signals inserted according to each of said at least one reference signal pattern are a proper subset of a finite arithmetic progression ;

- said proper subset comprises at least three terms of the finite arithmetic progression, said at least three terms comprising the initial term of the finite arithmetic progression, and the final term of the finite arithmetic progression.

A proper subset is a subset of a set that contains some, but not all, of the elements of the original set. In other words, if SA is a proper subset of SB, then every element of SA is also an element of SB, but SA is not equal to SB; there is at least one element in SB that is not in SA.

Mathematically, if SA is a proper subset of SB, it is denoted as SA⊂SB and it satisfies the following conditions:

- every element of SA is also an element of SB

- there exists at least one element in SB that is not in SA

For example, consider the set SB={1,2,3,4}. The set SA={1,2,3} is a proper subset of SB because all elements of SA are in SB, and SA does not include the element 4 which is in SB.

In the context of the patent claim, the positions of the reference signals form a proper subset of a finite arithmetic progression, meaning that the reference signal positions include some, but not all, of the terms of the finite arithmetic progression.

The cardinality of a or subset is the number of elements of the set or subset. For example, the cardinality of the set SB={1,2,3,4} is 4, while the cardinality of the set SA={1,2,3} is 3.

A finite arithmetic progression is a sequence of numbers in which the difference between consecutive terms is constant, and the sequence has a finite number of terms. This constant difference is called the common difference.

Mathematically, a finite arithmetic progression can be defined as follows:

Let A be the initial term, k be the common difference, and n be the number of terms in the sequence. The terms of the finite arithmetic progression are given by: A, A+k, A+2k, ..., A+(n-1)k, where:

- A is the initial term of the progression.

- k is the common difference between consecutive terms.

- n is the total number of terms in the progression.

For example, consider the initial term A=2, the common difference k=3, and the number of terms n=7. The finite arithmetic progression would be: 2,5,8,11,14,17,20.
In this example:

- The initial term A is 2 ;
- The common difference k is 3 ;
- The number of terms n is 7 ;
- The final term is 20.

The initial term of a finite arithmetic progression is the first term in the progression. It is the starting point from which the progression begins. In mathematical notation, if A is the initial term, then the sequence starts with A.
For example:

- in the finite arithmetic progression A, A+k, A+2k, ..., A+(n-1)k, the initial term is A. A also corresponds to the first or initial position of the RS signals of a pattern ;

- in the example described above, where the initial term is A=2, the common difference k=3, and the number of terms n=7, the finite arithmetic progression would be: 2,5,8,11,14,17,20 and the initial term would be 2.

The final term of a finite arithmetic progression is the last term in the progression. It is the ending point at which the progression stops.
For example,:

- in the finite arithmetic progression A, A+k, A+2k, ..., A+(n-1)k, the final term is A+(n-1)k ;

- in the example described above, where the initial term is A=2, the common difference k=3, and the number of terms n=7, the finite arithmetic progression would be: 2,5,8,11,14,17,20 and the final term would be 20.

It is thus apparent that the proper subset contains some, but not all the terms of the arithmetic progression including the initial term, the final term and at least one other term of the arithmetic progression. Therefore, the proper subset defines a large number of differences between the terms of the arithmetic progression that belongs to the proper subset, but not all the terms to the arithmetic progression belong to the subset.
Therefore, the positions that belong to the proper subset allow calculating a large number of position differences, despite the number of positions being reduced. Therefore, a long-term characteristic of the transmission channel, such as for example a coherence time, or a coherence bandwidth, or an autocorrelation of the phase noise, can be calculated while the overhead caused by the insertion of reference signal is being reduced. More generally, any use of reference signals involving computations based on reference signals spaced by different distances can be achieved with a reduced overhead.
In another aspect, it is proposed a method for inserting reference signals implemented by computer means of a telecommunication device, said telecommunication device comprising a modulator, said method comprising: obtaining a sequence of signal samples, by inserting reference signals according to at least one reference signal pattern within a sequence of data samples ; feeding said modulator with signal blocks obtained from said sequence of signal samples ; wherein: the positions, in said sequence of signal samples, of the reference signals inserted according to each of said at least one reference signal pattern are the marks of a sparse ruler multiplied by a multiplicative coefficient added to a position offset ; said multiplicative coefficient is an integer number equal to or higher than 1 ; said position offset is an integer number equal to or higher than 0.
A sparse ruler is a sequence of integers that represents a ruler with some of the distance marks missing. More formally, a sparse ruler of length L with m marks (also called a sparse ruler of length L and order m) is a sequence of integers $a_1, a_2, ...a_m$ such as $0=a_1<a_2<...<a_m=L$.
In order to measure a distance D there must be at least one pair of marks $a_i$ and $a_j$ such as $a_j-a_i$=D.
A mark of a sparse ruler is one of the specific positions or points along the ruler where a measurement can be made. In the context of a sparse ruler, these marks are the integers in the sequence that defines the ruler. The marks are used to measure distances between points on the ruler.

More formally, if we have a sparse ruler of length L with m marks, the marks are the integers $a_1, a_2, ..., a_m$ such that: $0 = a_1 < a_2 < ... < a_m = L$, each ai (where i ranges from 1 to m) is a mark of the sparse ruler. These marks are used to measure distances between points on the ruler.

A positive integer is an integer without fractional part that is greater than or equal to 0.

A strictly positive integer is an integer without fractional part that is greater than 0.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

In another aspect, it is proposed a telecommunication device adapted to implement the method as defined here when the software is executed by a processor.

The following features, can be optionally implemented, separately or in combination one with the others:

Said communicating entity is a node of a network communication system

The indexes of the terms of the finite arithmetic progression that belong to said proper subset are the marks of a sparse ruler.

Said sparse ruler is a complete ruler.

A complete sparse ruler is a type of sparse ruler that allows one to measure any integer distance up to its full length. In other words, a complete sparse ruler of length L and order m is a sequence of integers $a_1, a_2, ..., a_m$ such that $0 = a_1 < a_2 < ... < a_m = L$, For any distance D between 1 and L to be measured, there are marks ai and $a_j$ such that *aj-a_j*=D.

A complete sparse ruler is thus a sparse rule that allows one to measure any integer distance up to its full length.

Inserting reference signals according to a complete sparse ruler allows measuring all the distances between the positions of the reference signals, and thus provides a complete estimation of the long-term characteristics of the phase noise. Meanwhile, the number of marks is importantly reduced compared to a complete ruler that would comprise all the marks.

Therefore, this allows using all possible distances between the refence signals, using a much lower number of reference signals than in a regular pattern.

Thus, it is possible to perform any use of reference signals that imply measuring the distances between reference signals, for example to discover numerous parts of a long-term characteristic of the transmission channel, with a reduced overhead.

Said sparse ruler is a maximal ruler

A maximal sparse ruler is a type of complete sparse ruler that has the greatest possible length for a given number of marks while still being able to measure all integer distances up to its full length. In other words, a maximal sparse ruler of length L and order m is a complete sparse ruler that cannot be extended in length without losing the ability to measure some distances with the same number of marks.

More formally, a maximal sparse ruler is a sparse ruler wherein :

-   for any distance D (where $1 \leq D \leq L$), there exist marks $a_i$ and $a_j$ such that $a_i - a_j = D$ ;

-   there is no complete sparse ruler of greater length (of length > L) with the same number of marks m that can measure all distances up to its length.

In the context of reference signal patterns, inserting reference signals according to a maximal sparse ruler ensures that the reference signals are inserted in a way that allows measuring all necessary distances up to the highest possible length for a given number of marks, thereby optimizing the tradeoff between reference signal density and system performance.

Therefore, this allows to measure distances between reference signals, for example to discover parts of a long-term characteristic of the transmission channel, up to the highest possible distance using a given number of reference signals.

Said sparse ruler is a minimal ruler

A minimal ruler is a type of complete sparse ruler that has the smallest possible number of marks needed to measure all integer distances up to its full length. In other words, a minimal ruler of length L and order m is a complete sparse ruler that cannot be reduced in the number of marks without losing the ability to measure some distances.

More formally, a minimal sparse ruler is a sparce ruler wherein :

- for any distance D (where $1 \leq D \leq L$), there exist marks $a_i$ and $a_j$ such that $a_i - a_j = D$ ;

- there is no complete sparse ruler of length L with fewer than m marks that can measure all distances up to L.

In the context of reference signal patterns, inserting reference signals according to a minimal ruler thus ensures that the reference signals are inserted in a way that allows measuring all necessary distances with the smallest possible number of reference signals, thereby minimizing the overhead. Therefore, this allows to measure distances between reference signals, for example to discover parts of a long-term characteristic of the transmission channel, up to a defined distance using the lowest possible number of reference signals, and thus the lowest possible overhead.

A sparse ruler is called optimal if it is both minimal and maximal.

Said sparse ruler is a Golomb ruler.

A Golomb ruler is a special type of sparse ruler in which all of the differences between the marks are distinct. In other words, a Golomb ruler is a sequence of integers such that the differences between every pair of marks are unique. There is no requirement that a Golomb ruler be able to measure all distances up to its length, but if it does, it is called a perfect Golomb ruler.

More formally, for any pair of marks $a_i$ and $a_j$ (where $i \neq j$), the differences $a_j - a_i$ are all distinct.

For example, consider a Golomb ruler of length L=6 and order m=4 with marks at positions $a_1=0$, $a_2=1$, $a_3=4$, and $a_4=6$. This is a perfect Golomb ruler because it measures each distance exactly once:

- Distance 1: 1-0
- Distance 3: 4-1
- Distance 4: 4-0
- Distance 2: 6-4
- Distance 5: 6-1
- Distance 6: 6-0.

In the context of reference signal patterns, using a Golomb ruler to determine the positions of the reference signals ensures that the reference signals are inserted in a way that optimizes the tradeoff between reference signal density and system performance, while maintaining unique distances between the reference signals.

Said sparse ruler may be a perfect Golomb ruler.

A perfect Golomb ruler is a ruler whose marks allow measuring, once and only once, all the distances up to its length. A perfect Golomb ruler thus allows measuring all the possible distances up to a given length. Therefore, when a perfect Golomb ruler is used to determine the positions of reference signals in a reference signal pattern, all the possible distances between reference signals can be used, for example to determine a long-term characteristic of the transmission channel.

Meanwhile, as each distance is measured only once, the number of marks to measure all the distances is minimized. Therefore, when a perfect Golomb ruler is used to determine the positions of reference signals in a reference signal pattern, the overhead caused by the insertion of the reference signals is minimized.

Each of said at least one reference signal pattern is such that:

- the proper subset comprises m positions, and m is an integer number such that $m \geq 3$;

- each of said m positions is identified by an index of the reference signal *i, i* being an integer comprised in an interval [1; ... ; *m*], and each of said m positions is equal to $p_i = A + k * a_i$, wherein:

  o *A is* the initial term of the finite arithmetic progression, and a positive integer ;

  o *$a_i$* is the index in said arithmetic progression of the $i^{th}$ element of said proper subset ;

  o *k is* the common difference of the finite arithmetic progression, and a strictly positive integer.

Reference signals are inserted according to a finite sequence (Seq9; Seq10) of reference signal patterns, said finite sequence of reference signal patterns having an order equal to or higher than 2 ;

for each index of the reference signal pattern j belonging to the index set of said finite sequence of reference signal patterns, the positions, in said sequence of signal samples, of the reference signals inserted according to the reference signal pattern of said index of the reference signal pattern j in said finite sequence of reference signal patterns are a proper subset of a finite arithmetic progression of said index of the reference signal pattern j in a finite sequence of finite arithmetic progressions.

By "order of a finite sequence", we designate the number of elements in the finite sequence. The order of the finite sequence therefore corresponds to the number of reference signal patterns that are inserted according to the sequence.

The index set of a finite sequence is the set of indices used to identify the positions of elements within that sequence. In a finite sequence, each element is associated with a unique index, typically starting from 1 or 0, and increasing sequentially. The index set provides a way to reference each element in the sequence.

For example, consider a finite sequence $S=\{Pat_1, Pat_2, Pat_3,..., Pat_{nseq}\}$. The index set for this sequence is $\{1,2,3,...,nseq\}$, where each index $j \varepsilon \{1,2,3, ...,nseq\}$ corresponds to a specific element in the sequence, and $nseq$ is the order of the sequence. The indexes of the index set of the sequence can for example be noted j, and in the example above the elements of index j of the sequence $S=\{Pat_1, Pat_2, Pat_3,..., Pat_n\}$ is $Pat_j$ with j $j \varepsilon \{1,2,3, ... , nseq\}$. For example the element of index 3 of the sequence S is $Pat_3$. The order of the finite sequence S is $nseq$.

Inserting the reference signals according to a plurality of reference signal patterns that comply with the features of the invention allows benefiting from the insertion of a plurality of distinct patterns.

For each index of the reference signal pattern j except the first index of the index set of the finite sequence of reference signal patterns, the initial term of the finite arithmetic progression of said index of the reference signal pattern j in said sequence of finite arithmetic progressions is strictly superior to the final term of the immediately preceding finite arithmetic progression in said sequence of finite arithmetic progressions.

By "the first index of the index set of the finite sequence of reference signal patterns", we designate the index that is placed first in the index set, and corresponds to the lowest possible index. The first index of the index set of the finite sequence of reference signal patterns is thus typically 0 or 1. For simplicity, in the following it is considered in a not-limitative manner that the index starts at 1, but other conventions may apply.

This allows ensuring that the insertion of reference signals from the different patterns do not overlap. This therefore optimizes the insertion of reference signals from a plurality of different patterns.

A first finite arithmetic progression belonging to said sequence of finite arithmetic progressions and a second finite arithmetic progression belonging to said sequence of finite arithmetic progressions, said second finite arithmetic progression being distinct from the first arithmetic progression, fulfil one or more of the following conditions :

- the initial term of the first finite arithmetic progression is different from the initial term of the second finite arithmetic progression;

- the common difference of the first finite arithmetic progression is different from the common difference of the second finite arithmetic progression ;

- the difference between the initial term and the final term of the first finite arithmetic progression is different from the difference between the initial term and the final term of the second finite arithmetic progression;

- the cardinality of the proper subset of the first finite arithmetic progression is different from the cardinality of the proper subset of the second finite arithmetic progression.

Using different possible values of these parameters allows discovering different elements of a long-term characteristics . For example, it allows discovering different parts of the autocorrelation of a phase noise, or channel autocorrelation characteristics in different domains.

At least one of :

- the difference between the initial term and the final term of the finite arithmetic progression plus one ;

- the final term of the finite arithmetic progression plus one ;

- the initial term of the arithmetic progression ;

- the difference between the initial terms of two arithmetic progressions of two consecutive reference signal patterns ;

is a multiple of a resource allocation unit.

This eases the implementation because the sequence of patterns can be aligned with the resource allocation units. In particular, multiples of 12 can be used in NR or LTE systems based on OFDM (or DFTsOFDM) the smallest allocation unit in the frequency domain (or in the pre-DFT domain) is a Resource Block (RB) consisting in 12 subcarriers.

Said telecommunication device is a sender node of a wireless communication system ;

- said method comprises:

    o sending to one or more receiver node, or receiving from said one or more receiver node a first signaling indicating a first reference signal pattern belonging to a reference signal pattern type ;

    ◦ obtaining a first sequence of signal samples, by inserting reference signals according to the first reference signal pattern within a first sequence of data samples ;

    o feeding said modulator with signal blocks obtained from said first sequence of signal samples ;

    o sending, to one or more receiver node, or receiving from said one or more receiver, a second signaling indicating a switch to a second pattern belonging to said reference signal pattern type ;

    ◦ obtaining a second sequence of signal samples, by inserting reference signals according to the second reference signal pattern within a second sequence of data samples ;

    o feeding said modulator with signal blocks obtained from said second sequence of signal samples.

The steps of the method thus allow using reference signals according to two different reference signal patterns. The parameters of the first and second RS patterns can be selected, for example to use different distances between RS signals. This allows measuring different distances of the RS received by the receiver, for example in order to discover different parts of a long-term characteristic (for example different parts of an autocorrelation function of a phase noise or of other channel parameter).

The reference signal patterns belonging to a reference signal pattern type are associated with a same reference sparse ruler ;

each reference signal patterns belonging to said reference signal pattern type is associated with a unique common difference of finite arithmetic progression.

A pattern type refers to a specific configuration or arrangement used for inserting reference signals within a sequence of data samples in a communication system. It defines the structure and characteristics of how reference signals are distributed across the data stream. A pattern type may include parameters such as the spacing, density ,repetition, etc.

According to various embodiments of the invention, a pattern type may be defined by:

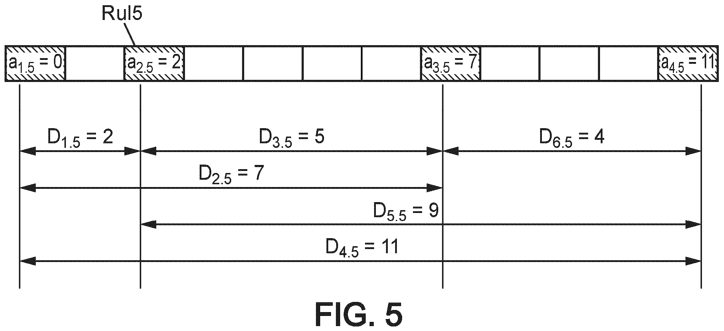

- a set of positions $p'_i = k * a_i$ relative to the first RS position of the pattern (which corresponds to the initial term A of the finite arithmetic progression. For example, the ruler Rul5 represented in figure 5 could be used to define:

    o a first pattern type where k has a preset value k = 1. The first pattern type is thus characterized by the relative positions $\{p'_1 = 0; p'_2 = 2; p'_3 = 7; p'_4 = 11\}$. Thus, a RS insertion pattern can be obtained by setting only the value of A for the first pattern type, thereby defining the positions of RS inserted according to a pattern belonging to the first pattern type with a given value of A: $p_i = p'_i + A$ : $\{p_1 = A; p_2 = A+2; p_3 = A + 7; p_4 = A + 11\}$: ;

    o a second pattern type where k has a preset value k = 2. The second pattern type is thus characterized by the relative positions $\{p'_1 = 0; p'_2 = 4; p'_3 = 14; p'_4 = 22\}$. Thus, a RS insertion pattern can be obtained by setting only the value of A for the second pattern type, thereby defining the positions of RS inserted according to a pattern belonging to the second pattern type with a given value of A: $p_i = p'_i + A$: : $\{p_1 = A; p_2 = A + 4; p_3 = A + 14; p_4 = A + 22\}$: ;

    o Etc ;

- an ordering of reference signal associated with one or more parameters. For example, a defined Golomb ruler may be associated with a spacing parameter that allows "zooming in or out" to obtain a list of positions to insert reference signals. Taking again the example of the ruler Rul5 represented in figure 5, a pattern type characterized by the parameters A and k can be built based on the Golomb ruler represented in figure 5, where the definition of the values of A and k define a pattern comprising the positions $\{p_1 = A; p_2 = A+2 * k; p_3 = A + 7*k; p_4 = A+11 * k\}$.

Therefore, a reference signal insertion pattern can be completely defined by a type of pattern, and the values of the corresponding parameter or parameters.

Thus, different spacings of reference signals can be obtained using a limited number of values of parameters to transmit, since a reference signal pattern of the reference signal pattern type is defined only by the unique common difference of finite arithmetic progression (and optionally the initial value of the arithmetic progression).

Said modulator is a discrete Fourier transformation spread orthogonal frequency division multiplexing modulator ;

- Discrete Fourier Transformation is applied by said modulator after the insertion of the reference signal ;
- a transformed succession of signal blocks resulting at least from the application of the discrete Fourier transformation to said succession of signal blocks includes transformed signal blocks, each transformed signal block being mapped to active carriers.

**Brief Description of Drawings**

Other features, details and advantages will be shown in the following detailed description and on the figures, on which:

Fig. 1

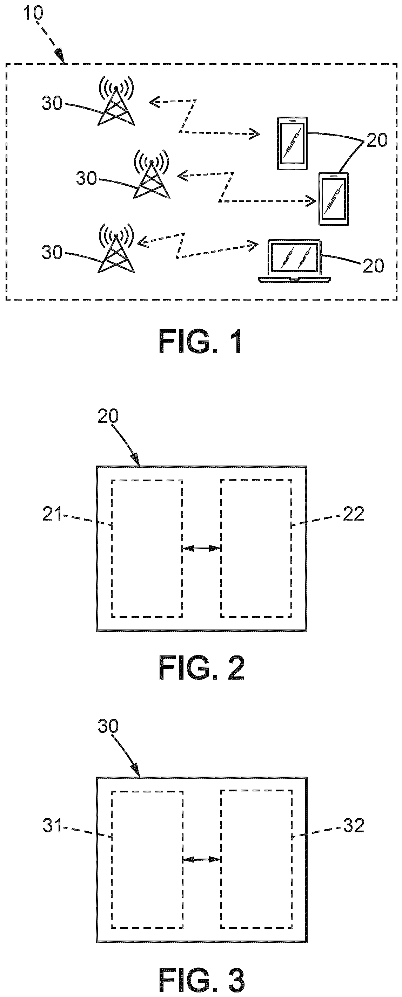

[Fig. 1] is a schematic representation of a radiofrequency wireless communication system according to an embodiment.

Fig. 2
[Fig. 2] is a schematic representation of an exemplary embodiment of a terminal of the wireless communication system according to an embodiment.

Fig. 3
[Fig. 3] is a schematic representation of an exemplary embodiment of a base station of the wireless communication system according to an embodiment.

Fig. 4

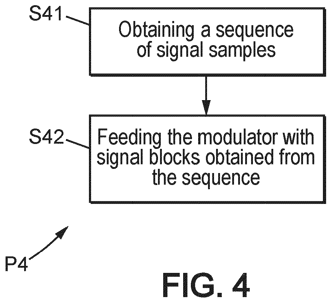

[Fig. 4] is a schematic representation of a method implemented by a sender node according to an embodiment.

Fig. 5
[Fig. 5] is a first example of an incomplete Golomb ruler allowing to define positions of reference signals of a reference signal pattern according to an embodiment.

Fig. 6

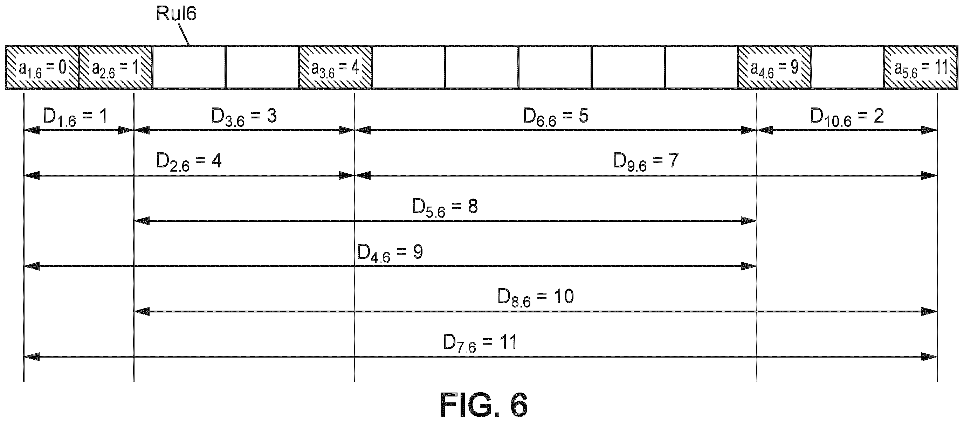

[Fig. 6] is a second example of an incomplete Golomb ruler allowing to define positions of reference signals of a reference signal pattern according to an embodiment.

Fig. 7

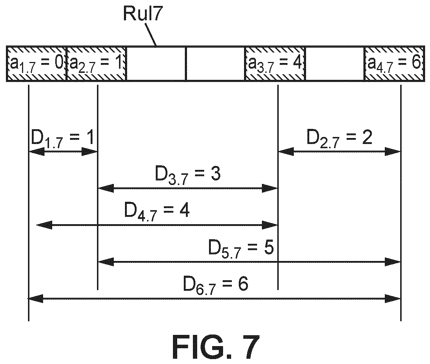

[Fig. 7] is an example of a perfect Golomb ruler allowing to define positions of reference signals of a reference signal pattern according to an embodiment.

Fig. 8

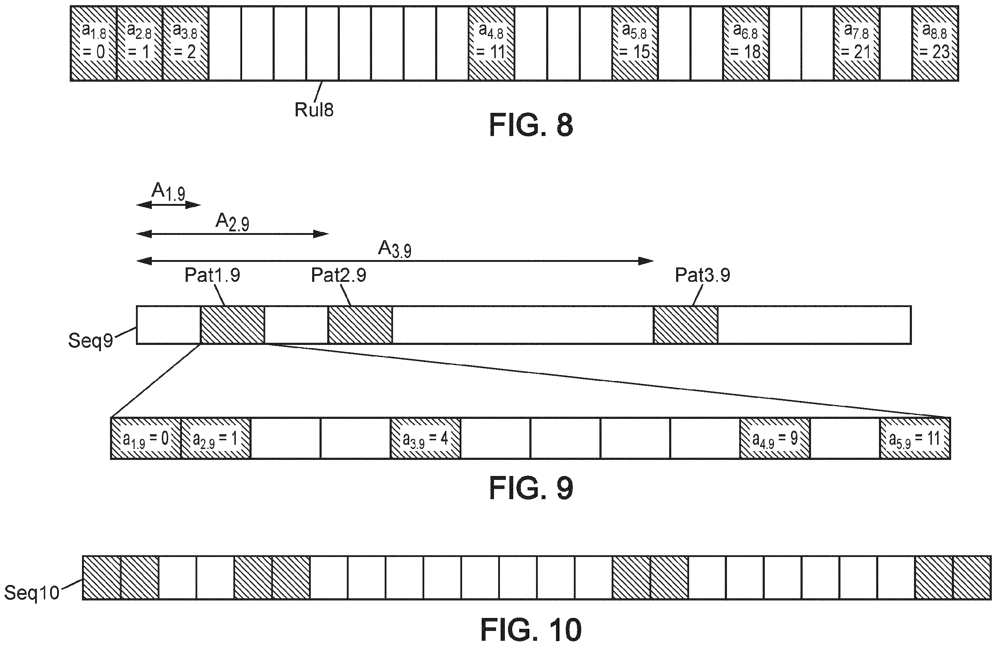

[Fig. 8] is an example of an optimal sparse ruler allowing to define positions of reference signals of a reference signal pattern according to an embodiment.

Fig. 9
[Fig. 9] is a first example of a sequence of reference signal patterns according to an embodiment.

Fig. 10
[Fig. 10] is a second example of a sequence of reference signal patterns according to an embodiment.

Fig. 11

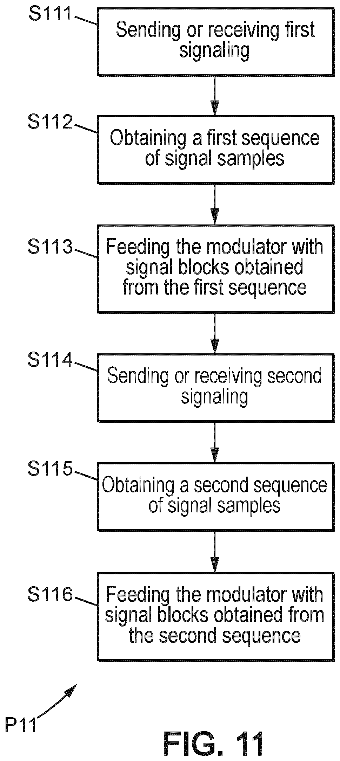

[Fig. 11] is an example of a method implemented by a sender node according to an embodiment, wherein the sender noted uses successively two distinct reference signal patterns in accordance with signaling exchanged with one or more receiver node.

Fig. 12

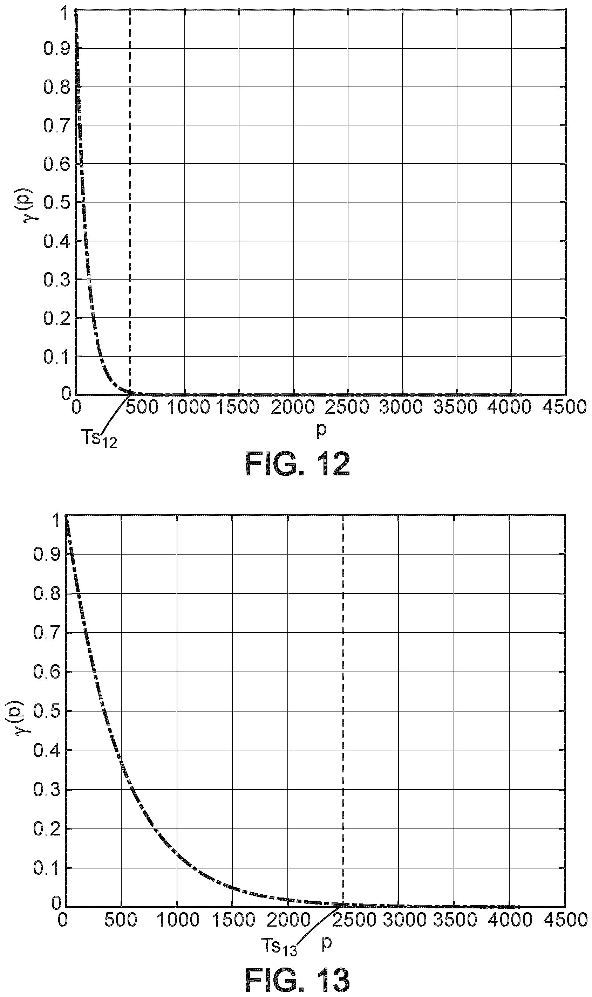

[Fig. 12] is first example of an autocorrelation function of the phase noise of a wireless communication that can be determined according to an embodiment.

Fig. 13

[Fig. 13] is second example of an autocorrelation function of the phase noise of a wireless communication that can be determined according to an embodiment.

Fig. 14

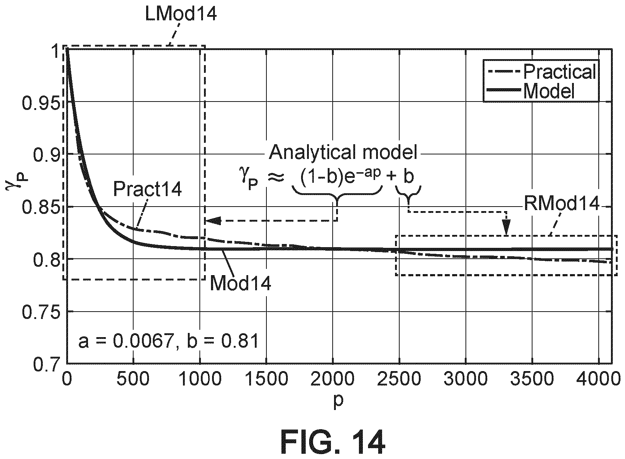

[Fig. 14] is an example of an estimation of an autocorrelation of phase noise in an embodiment of the invention .

## Description of Embodiments

Figure 1 represents schematically an exemplary embodiment of a radiofrequency wireless communication system 10. As illustrated by figure 1, the wireless communication system 10 comprises one or more terminals 20 (a.k.a. user equipment) and one or more base stations 30. The terminals 20 are adapted to exchange data with the base stations 30 of via wireless links established with said base stations 30.

Each of the one or more base stations 30 and the one or more terminals 20 forms a node of the radiofrequency wireless communication system 10. As will be explained in more details hereinafter, the methods of the disclosure help improving the communications between nodes of a radiofrequency wireless communication system such as the system 10. Even though figure 1 represents a system with terminals and base stations, the methods of the disclosure may apply to any kind of communication between nodes of a radiofrequency wireless communication system, for example communications between terminals.

In each communication, a node that sends data is called "sender node" (or "transmitter node"), or simply "sender" or "transmitter". In the following, the terms "sender" and "transmitter" have the same meaning of designating a sender/transmitter node. Conversely, the node that receives the data is called "receiver node" or simply "receiver". In a communication between two nodes, the two nodes can alternatively be sender and receiver.

For example, in a communication between a base station and a user equipment, the base station and the user equipment can both be alternatively sender and receiver. A communication from a base station to a user equipment is generally qualified of "downlink", while a communication from a user equipment to a base station is generally qualified of "uplink" and a communication between two user equipments generally qualified of "sidelink". Therefore, in a downlink communication, the sender node is a base station and the receiver node a user equipment or terminal, while in a uplink communication, the sender node is a user equipment or terminal, and the receiver node is a base station. In a sideling communication, both the receiver and the sender nodes are user equipments.

Figure 2 represents schematically an exemplary embodiment of a terminal 20. In this exemplary embodiment, the terminal 20 comprises a processing circuit 21. For instance, the processing circuit 21 comprises one or more processors and one or more memories. The one or more processors may include for instance a central processing unit (CPU), a digital signal processor (DSP), a field-programmable gate array (FPGA), an application specific integrated circuit (ASIC), etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of a wireless communication method P5 or P6.

The terminal 20 comprises also a wireless communication unit 22, coupled to the processing circuit 21, allowing said terminal 20 to exchange data on wireless links of the radiofrequency wireless communication system 10, in the form of radiofrequency signals. The wireless communication unit 22 includes for instance a radiofrequency circuit comprising components (antenna(s), amplifier(s), local oscillator(s), mixer(s), analog and/or digital filter(s), etc.) considered known to the skilled person.

In other words, the processing circuit 21 and the wireless communication unit 22 of the terminal 20 form a set of means configured by software (specific computer program product) and/or by hardware (CPU, DSP, FPGA, ASIC, discrete electronic components, radiofrequency circuit, etc.) to implement all or part of the steps of the wireless communication method P4 or P11 which will be discussed hereinafter. Of course, the terminal 20 may also, in some cases, comprise other components which are not represented in the figures and not detailed herein.

Figure 3 represents schematically an exemplary embodiment of a base station 30. In this exemplary embodiment, the base station 30 comprises a processing circuit 31. For instance, the processing circuit 31 comprises one or more processors and one or more memories. The one or more processors may include for instance a CPU, a DSP, an FPGA, an ASIC, etc. The one or more memories may include any type of computer readable volatile and non-volatile memories (magnetic hard disk, solid-state disk, optical disk, electronic memory, etc.). The one or more memories may store a computer program product, in the form of a set of program-code instructions to be executed by the one or more processors in order to implement all or part of the steps of a wireless communication method P4 or P11.

The base station 30 comprises also a wireless communication unit 32, coupled to the processing circuit 31, allowing said base station 30 to exchange data on wireless links with terminals 20, in the form of radiofrequency signals. The wireless communication unit 32 includes for instance a radiofrequency circuit comprising components considered known to the skilled person.

In other words, the processing circuit 31 and the wireless communication unit 32 of the base station 30 form a set of means configured by software (specific computer program product) and/or by hardware (CPU, DSP, FPGA, ASIC, discrete electronic components, radiofrequency circuit, etc.) to implement all or part of the steps of the wireless communication method P4 or P11 which will be discussed hereinafter. Of course, the base station 30 may also, in some cases, comprise other components which are not represented in the figures and not detailed herein.

The wireless communication units 22, 32 of respectively the terminal 20 and the base station 30 implement one or more wireless communication protocols, for instance Wi-Fi and/or Bluetooth wireless communication protocols, and/or cellular communication protocols such as 3G, 4G, 5G, etc. Depending on the embodiments, the wireless communication system 10 may correspond to a wireless local area network, WLAN, or to a wireless wide area network, WWAN, etc. In some embodiments, the wireless communication system 10 relies at least in part on an orthogonal frequency division multiplexing, OFDM and/or on a discrete Fourier transform-spread OFDM, DFT-s-OFDM and/or on a single carrier transmission.

As discussed above, one of the possible objectives of the insertion of reference signals is the estimation of phase noise. Phase noise may be introduced, in a wireless communication between a transmitter and a receiver, at both the transmitter side (when e.g. frequency translating, by means of one or more local oscillators, a baseband signal from a baseband frequency to a carrier frequency) and the receiver side (when e.g. frequency translating, by means of one or more local oscillators, a radiofrequency signal from a carrier frequency to a baseband frequency). The characteristics of the phase noise introduced depend on the respective characteristics of each local oscillator involved such that, for a same receiver node, the phase noise characteristics may vary when communicating with different sender node, since each sender node will use its own local oscillators with their own characteristics.

At the receiver node, the baseband signal obtained after frequency translating the received radiofrequency signal and potentially after equalization may be expressed in time-domain as successive signals / samples :

$$y_n = \psi_n x_n + z_n$$

wherein:

- $y_n$ corresponds to the $n^{th}$ received time-domain signal,
- $x_n$ corresponds to the $n^{th}$ transmitted time-domain signal,
- $z_n$ corresponds to an additive noise, which may be e.g. a zero-mean additive white gaussian noise, AWGN,
- $\psi_n = e^{j\phi_n}$, with $\phi_n \in [-\pi; \pi]$, corresponds to the combined phase noise introduced by both the sender node and the receiver node.

For instance, if we consider a DFT-s OFDM wireless communication system 10, then a time-domain OFDM symbol $\underline{x} = [x_1 ... x_N]$ of length $N$ is spread by a discrete Fourier transform, DFT, $F_N$, thereby producing a DFT-spread OFDM symbol $X = [X_1 ... X_N] = F_N \underline{x}$. The DFT-spread OFDM symbol X is then mapped onto different subcarriers and converted to time-domain by e.g. an inverse fast Fourier transform, IFFT, of size M > N, and then converted to a radiofrequency signal transmitted to the receiver node.

For instance, the phase noise may be characterized by its 2$^{nd}$ order statistics, e.g. by an autocorrelation function $\underline{\gamma}$ = [$\gamma(0) ... \gamma(N - 1)$] with:

$$\gamma(p) = \mathbb{E}[\psi_n \psi_{n-p}{}^{*}]$$

- $\mathbb{E}[\cdot]$ corresponds to the expectation,
- p denotes a delay between phase noise components.

It is now referred to figure 4.

Figure 4 illustrates an example of a method P4 for inserting reference signals implemented by computer means of a telecommunication device that comprises a modulator. The modulator may be, by means of a non-limitative example, a modulator for one of the insertions listed below:

- Insertion in the frequency domain (per subcarrier) of RS in an OFDM system

- Insertion in time or frequency or delay or Doppler domain in an OFDM based system with or without precoding

- E.g. pre-DFT or post-DFT insertion in a DFT-precoded OFDM system

- Pre- or post- precoding insertion in an OTFS system

- Insertion in e.g. time domain in a single-carrier system or in a CDMA system

The method P4 comprises a first step S41 of obtaining a sequence of signal samples, by inserting Reference Signals (RS) according to at least one reference signal pattern within a sequence of data samples.

Stated otherwise, the method takes as input a sequence of data samples to transmit to one or more receiver. Reference signal samples are inserted within the sequence of data samples, thereby obtaining a sequence of signal samples that comprises both data samples and reference signals.

The insertion can be performed in different ways, notably depending upon the type of modulator. As explained above, for example the following types of modulation may be used:

- Insertion in the frequency domain (per subcarrier) of RS in an OFDM system ;
- Insertion in time or frequency or delay or Doppler domain in an OFDM based system with or without precoding:

  ◦ E.g. pre-DFT or post-DFT insertion in a DFT-precoded OFDM system
  o Pre- or post- precoding insertion in an OTFS system

- Insertion in e.g. time domain in a single-carrier system or in a CDMA system.

Signal blocks can then be obtained from the sequence of data samples in order to feed the modulator.

The method P4 comprises a second step S42 of feeding the modulator with the signal blocks obtained from the sequence of signal samples.

The modulator thus performs the modulation of the data blocks, thereby sending the sequence of signal samples comprising the data samples and reference signals.

The reference signal patterns used by the method of P4 are remarkable in that:

- the positions, in said sequence of signal samples, of the reference signals inserted according to each of said at least one reference signal pattern are a proper subset of a finite arithmetic progression ;

- said proper subset comprises at least three terms of the finite arithmetic progression, said at least three terms comprising the initial term of the finite arithmetic progression, and the final term of the finite arithmetic progression.

Another, equivalent, way of specifying the positions of the reference signals is that:

- the positions, in said sequence of signal samples, of the reference signals inserted according to each of said at least one reference signal pattern are the marks of a sparse ruler multiplied by a multiplicative coefficient added to a position offset ;

- said multiplicative coefficient is an integer number equal to or higher than 1 ;

- said position offset is an integer number equal to or higher than 0.

In the remaining of the description, the conventions below will be adhered to designate the values defining the insertion pattern:

- a single insertion pattern, or a sequence comprising a plurality of insertion patterns may be inserted ;

- if a plurality of insertion patterns are used, each insertion will be referred to by an index of the reference signal pattern j, and all the subscript j will be added to all the parameters and positions relative to that insertion pattern. When a plurality of insertion patterns are used, the plurality of patterns may correspond to a repetition of the same pattern (e.g a same pattern is repeated by only modifying the first insertion position), or different patterns may be used. If a single pattern is used, no subscript j will be added to the parameters and positions relative to the pattern ;

- the initial term of the arithmetic progression (or equivalently the position offset) will be noted $A$ (if a single insertion pattern is considered) or $A_j$ (for an insertion pattern of index j among a sequence of insertion patterns) ;

- the number of positions of an insertion pattern, which is also the order of the corresponding sparse ruler, or alternatively the cardinality (number of elements) of the proper subset of the arithmetic progression, will be noted m (if a single insertion pattern is considered) or $m_j$ (for an insertion pattern of index j among a sequence of insertion patterns;

- each insertion pattern thus comprises m, or $m_j$, positions. Thus m, or $m_j$, reference signals are inserted according to a given pattern. Each reference signal is referred to by an index i of the reference signal within the pattern with i = 1, ...,m (or $m_j$). The position of the reference signal of index i is noted $p_i$ (or $p_i^j$ );

- when the positions of the reference signals are expressed using sparse ruler, the marks of the sparse rulers are noted $a_i$ (or $a_i^j$ ) with i = 1, ...,m (or $m_j$).

To provide a concrete example, let's imagine a case where the reference signals are inserted according to a reference signal pattern in the positions 2, 5, 14 and 20 of the sequence of signal samples.
The positions of the reference signals are a proper subset of a finite arithmetic progression:

- the finite arithmetic progression has an initial term A = 2, a common difference k = 3, and comprises 7 terms is the finite arithmetic progression 2 5 8 11 14 17 20 ;

- The indexes of the terms of the finite arithmetic progression are:

  ◦ Initial term 2 : index i = 1 ;

  o term 5: index i = 2 ;

  o term 8: index i = 3 ;

  o term 11: index i = 4 ;

  o term 14 index i = 5;

  o term 17: index i = 6 ;

  ◦ final term 20: index i = 7.

- The set of positions {2, 5, 14, 20} is a proper subset of the finite arithmetic progression that comprise at least 3 terms (4 terms is in this example), since all the positions belong to the finite arithmetic progression, but some of the terms of the finite arithmetic progression do not belong to the proper subset. The proper subset also comprises the initial term 2, and the final term 20 of the arithmetic progression. The proper subset thus comprises m = 4 positions. The number of positions of the proper subset is in general such that m ≥ 3.

It is thus apparent that the proper subset contains some, but not all the terms of the arithmetic progression including the initial term, the final term and at least one other term of the arithmetic progression. Therefore, the proper subset defines a large number of differences between the terms of the arithmetic progression that belongs to the proper subset, but not all the terms to the arithmetic progression belong to the subset.
Therefore, the positions that belong to the proper subset allow calculating a large number of position differences, despite the number of positions being reduced. Therefore, any use of reference signals that involves reference signals placed at different distances can be performed with a reduced overhead. For example, a long-term characteristic, such as for example (but not limited to) an autocorrelation of a phase noise, can be calculated while the overhead caused by the insertion of reference signal being reduced.
The reference signal pattern can also be defined as comprising positions that are marks of a sparse ruler. In this case:

- the number of positions $m \geq 3$ of the pattern is the order of the sparse ruler. In the previous example where the reference signal pattern comprises the positions 2, 5, 14, 20, the order of the sparse ruler is thus $m_j = 4$ ;

- each of said m positions is identified by an index of the reference signal $i$, $i$ being an integer comprised in an interval $[1; ... ; m]$. In the previous example where the reference signal pattern comprises the positions 2, 5, 14, 20:

  o the index of the reference signal of the position 2 is $i = 1$ ;

  o the index of the reference signal of the position 5 is $i = 2$ ;

  o the index of the reference signal of the position 14 is $i = 3$ ;

  o the index of the reference signal of the position 20 is $i = 4$ ;

- each of said m positions is equal to $p_i = A + k * a_i$, wherein:

  o $A$ is a position offset, that is equal to the initial term of the finite arithmetic progression, and a positive integer ;

  o $a_i$ is the $i^{th}$ mark of the sparse ruler, that is also equal to the index in said arithmetic progression of the $i^{th}$ element of said proper subset ;

  o $k$ *is* a multiplicative coefficient, and a strictly positive integer, and is equal to the common difference of the finite arithmetic progression. $k$ can be qualified of a "scaling" or "zoom" factor, as it extends the positions of the reference signals compared to the marks of the sparse ruler.

Using again the example of the reference signal pattern comprises the positions 2, 5, 14, 20:

- The position offset (equivalent to the initial value of the arithmetic progression) is $A = 2$ ;

- The multiplicative coefficient (equivalent to the common difference of the arithmetic progression) is $k = 3$ ;

- The marks of the sparse ruler (equivalent to the indexes of the term of the finite arithmetic progression that belong to the subset) are: $a_1 = 0$, $a_2 = 1$, $a_3 = 4$, $a_4 = 6$. The ruler can be qualified as a "sparse ruler", since the marks 2, 3 and 5 are absent.

- The positions of the m = 4 reference signals are therefore:

  o

$$p_1 = A + k * a_1 = 2 + 3 * 0 = 2 ;$$

  o

$$p_2 = A + k * a_2 = 2 + 3 * 1 = 5 ;$$

  o

$$p_3 = A + k * a_3 = 2 + 3 * 4 = 14 ;$$

  o

$$p_4 = A + k * a_4 = 2 + 3 * 6 = 20.$$

It is thus worth noting that the reference to a sparse ruler or a proper subset of the arithmetic progression express the same idea that some positions of reference signals are removed compared to a regular pattern (where the reference signals are regularly spaced), thereby allowing to measure different distances between reference signals with a reduced overhead.

The insertion patterns used in the method P4 provide a number of advantages, which are non-limitatively listed below.

In general, they provide support for measuring distances between reference siganls at the receiver side without the need of inserting new reference signals. For example, they provide support for refining the long-term statistics during the dynamic estimation of phase noise without the need of inserting new specific reference signals.

They can also be used with the purpose of acquiring synchronization, with the advantage of unequivocally detecting the symbol timing by detecting a given distance between reference symbol position, which is not the case when regular sequences are employed.

It is now referred to figures 5 to 8.

Figures 5 to 8 represent four examples of sparse rulers allowing to define positions of reference signals of a reference signal pattern according to an embodiment.

In each of the figures 5 to 8, the sparse ruler are represented in a line of squares, where the marks of the sparse ruler are represented in light gray, while the missing marks are left blank. The marks of each sparse ruler are noted in the figures in the form "$a_i$ = ", and, in figures 5 to 7, the distances between the marks are represented by arrows between the marks and under the ruler. For figure 8, the distances are not represented by arrows under the ruler but are listed instead in the description below, because there are too many distances and the intelligibility of the figures would be reduced.

It is to be recalled that the sparse rulers represented in the figures 5 to 8 do not define directly the positions of reference signals inserted according to one pattern, but the position $p_i$ of the reference signal of index $i$ in the reference signal pattern is defined for each mark $a_i$ of the sparse ruler by: $p_i = A + k * a_i$, where:

-   $A$ is a position offset which also corresponds to the initial value of the arithmetic progression and the position of the first sample, since in the current description, for simplicity reasons, the first mark of the sparse rulers is always considered as $a_i = 0$ unless stated otherwise; In this specific case, $L = a_m$. Other numbering conventions are possible and different formulae for computing the position $p_i$, or the relationship between L and $a_m$ can be derived in a straightforward manner depending on the considered convention.

-   $k$ *is* a multiplicative factor, which is also the common difference of the arithmetic progression and the lowest possible distance between two successive reference signals.

Although, in general, the marks of a sparse ruler are noted $a_1$, $a_2$, $a_3$, etc. a different notation will be used in figures 5 to 8 to represent the marks, where each mark in each figure has a unique identifier, to ensure that each mark is clearly and unambiguously identified. To this effect, the subscript will be completed with a dot and the number of the figure. For example, the first mark of a ruler will be noted $a_{1.5}$ in figure 5, $a_{1.6}$ in figure 6, etc. instead of $a_1$ in all the figures.

Figure 5 represents a first example of an incomplete Golomb ruler allowing to define positions of reference signals of a reference signal pattern according to an embodiment.

The ruler Rul5 is a sparse ruler of length L = 11, and of order m = 4. Rul5 thus has m = 4 marks :

-

$$a_{1.5} = 0 \; ;$$

-

$$a_{2.5} = 2 \; ;$$

-

$$a_{3.5} = 7 \; ;$$

-

$$a_{4.5} = 11.$$

Rul5 allows measuring 6 distances:

$$D_{1.5} = a_{2.5} - a_{1.5} = 2 ;$$

$$D_{6.5} = a_{4.5} - a_{3.5} = 4.$$

$$D_{3.5} = a_{3.5} - a_{2.5} = 5 ;$$

$$D_{2.5} = a_{3.5} - a_{1.5} = 7 ;$$

$$D_{5.5} = a_{4.5} - a_{2.5} = 9 ;$$

$$D_{4.5} = a_{4.5} - a_{1.5} = 11.$$

The ruler Rul5 is a Golomb ruler, because the 6 measured distances are all distinct. This highlights one advantage of using a Golomb ruler, which is that the number of distances that can be measured using a given number of marks is particularly high. When a Golomb ruler such as the Golomb ruler Rul5 is used to define the positions of reference signals in a reference signal pattern, the number of possible distances between two signals is therefore very high for a given number of signals. Thus, a long-term characteristic can be estimated according to many different distances between reference signals, with a limited overhead.

The ruler Rul5 is also incomplete, because some of the distances (for example 1, 3, 6...) cannot be measured.

Figure 6 represents a second example of an incomplete Golomb ruler allowing to define positions of reference signals of a reference signal pattern according to an embodiment.

The ruler Rul6 is a sparse ruler of length L = 11, and of order m = 5. Rul6 thus has m = 5 marks :

$$a_{1.6} = 0 ;$$

$$a_{2.6} = 1 ;$$

$$a_{3.6} = 4 ;$$

$$a_{4.6} = 9 ;$$

$$a_{5.6} = 11.$$

Rul6 allows measuring 10 distances:

-

$$D_{1.6} = a_{2.6} - a_{1.6} = 1 \; ;$$

-

$$D_{10.6} = a_{5.6} - a_{4.6} = 2 \; ;$$

-

$$D_{3.6} = a_{3.6} - a_{2.6} = 3 \; ;$$

-

$$D_{2.6} = a_{3.6} - a_{1.6} = 4 \; ;$$

-

$$D_{6.6} = a_{4.6} - a_{3.6} = 5 \; ;$$

-

$$D_{9.6} = a_{5.6} - a_{3.6} = 7 \; ;$$

-

$$D_{5.6} = a_{4.6} - a_{2.6} = 8 \; ;$$

-

$$D_{4.6} = a_{4.6} - a_{1.6} = 9 \; ;$$

-

$$D_{8.6} = a_{5.6} - a_{2.6} = 10 \; ;$$

-

$$D_{7.6} = a_{5.6} - a_{1.6} = 11.$$

The ruler Rul6 is a Golomb ruler, because the 10 measured distances are all distinct. The ruler Rul6 is also incomplete, because the distance 6 cannot be measured.

This example shows that adding a mark allows measuring more distances. In particular, Rul6 has the same length that Rul5, but a single additional mark allows measuring 10 distances instead of 6 distances. These two examples show that the characteristics of the sparse ruler, such as for example the number of marks, can be selected in order to comply with operational needs such as for example the distances to use for measurements or the overhead caused by the presence of reference signals.

Figure 7 represents an example of a perfect Golomb ruler allowing to define positions of reference signals of a reference signal pattern according to an embodiment.

The ruler Rul7 is a sparse ruler of length L = 6, and of order m = 4. Rul7 thus has m = 4 marks :

-

$$a_{1.7} = 0 \; ;$$

$$a_{2.7} = \; 1;$$

$$a_{3.7} = 4 \; ;$$

$$a_{4.7} = 6.$$

Rul7 allows measuring 6 distances:

$$D_{1.7} = a_{2.7} - a_{1.7} = 1 \; ;$$

$$D_{2.7} = a_{4.7} - a_{3.7} = 2 \; ;$$

$$D_{3.7} = a_{3.7} - a_{2.7} = 3 \; ;$$

$$D_{4.7} = a_{3.7} - a_{1.7} = 4 \; ;$$

$$D_{5.7} = a_{4.7} - a_{2.7} = 5 \; ;$$

$$D_{6.7} = a_{4.7} - a_{1.7} = 6.$$

The ruler Rul7 is a perfect Golomb ruler, because it measures once and only once each possible distance between 1 and its length L = 6.

This example demonstrates that all the distances up to the length of the ruler can be measured using a limited number of marks. Thus, when a perfect Golomb ruler such as the ruler Rul7 is used to define the positions of the reference signals in a reference signal pattern, all the possible distances can be used for determining a channel parameter, with a limited number of reference signals and thus a limited overhead.

Figure 8 represents an example of an optimal sparse ruler allowing to define positions of reference signals of a reference signal pattern according to an embodiment.

The ruler Rul8 is a sparse ruler of length L = 23, and of order m = 8. Rul8 thus has m = 8 marks :

$$a_{1.8} = 0 \; ;$$

$$a_{2.8} = 1 \; ;$$

-

$$a_{3.8} = 2 \; ;$$

-

$$a_{4.8} = 11 \; ;$$

-

$$a_{5.8} = 15 \; ;$$

-

$$a_{6.8} = 18 \; ;$$

-

$$a_{7.8} = 21 \; ;$$

-

$$a_{8.8} = 23.$$

The distances between the different marks are listed in the table below:

|          | $a_{2.8}$ | $a_{3.8}$ | $a_{4.8}$ | $a_{5.8}$ | $a_{6.8}$ | $a_{7.8}$ | $a_{8.8}$ |
|----------|-----------|-----------|-----------|-----------|-----------|-----------|-----------|
| $a_{1.8}$ | 1 | 2 | 11 | 15 | 18 | 21 | 23 |
| $a_{2.8}$ |   | 1 | 10 | 14 | 17 | 20 | 22 |
| $a_{3.8}$ |   |   | 9 | 13 | 16 | 19 | 21 |
| $a_{4.8}$ |   |   |   | 4 | 7 | 10 | 12 |
| $a_{5.8}$ |   |   |   |   | 3 | 6 | 8 |
| $a_{6.8}$ |   |   |   |   |   | 3 | 5 |
| $a_{7.8}$ |   |   |   |   |   |   | 2 |

In the table:

- Each mark is associated with a column and a line

- the distance between a first mark and a second, higher, mark is noted in the cell in the line of the first mark, and the column of the second mark ;

- For example, the distance of 1 in the top left cell corresponds to the distance between the first mark $a_{1.8}$ and the second mark $a_{2.8}$.

The ruler Rul8 is complete (since measures all distances up to L = 23) but it is not Golomb, because it measures some distances several times. In particular, Rul8 measures:

- Distance 1 : 2 times ;

- Distance 2 : 3 times ;

- Distance 3 : 2 times ;

- Distances 4, 5, 6, 7, 8, 9: 1 time ;

- Distance 10 : 2 times ;

- Distances 11, 12, 13, 14, 15, 16, 17, 18, 19, 20, 21, 22, 23: 1 time.

The ruler Rul8 is also an optimal ruler, because it is both minimal and maximal.

It is now referred to figures 9 and 10.

In a number of embodiments of the invention:

- reference signals are inserted according to a finite sequence of reference signal patterns, said finite sequence of reference signal patterns having an order equal to or higher than 2. The order of the finite sequence corresponds to the number of elements in the finite sequence, and thus the number of different reference signal patterns that are inserted ;

- for each index of the reference signal pattern j belonging to the index set of said finite sequence of reference signal patterns, the positions, in the sequence of signal samples, of the reference signals inserted according to the reference signal pattern of said index of the reference signal pattern j in said finite sequence of reference signal patterns are a proper subset of a finite arithmetic progression of said index of the reference signal pattern j in a finite sequence of finite arithmetic progressions. Stated otherwise, the reference signal patterns are inserted according to a sequence of a plurality of reference signal patterns that each exhibits the advantages of the reference signal patterns described here. Each reference signal pattern is thus identified by an index j in the sequence of reference signal patterns. For example, if the order (number of elements / reference signal patterns of the sequence is nseq, the sequence of reference signal patterns has an index set $\{1,2,3, ...,nseq\}$ , and each reference signal pattern is associated to an index $j \, \varepsilon \{1,2,3, ... , nseq\}$. As explained above, for each $j \, \varepsilon \{1,2,3, ... , nseq\}$, the positions, in the sequence of signal samples, of the reference signals inserted according to the reference signal pattern of index j in said finite sequence of reference signal patterns are a proper subset of a finite arithmetic progression of said index of $j$ in a finite sequence of finite arithmetic progressions. Stated otherwise, each reference signal pattern of the sequence of reference signal patterns is associated with a finite arithmetic progression of a same index $j$ in a sequence of finite arithmetic progressions. For each index $j$, the proper subset comprises at least three terms of the finite arithmetic progression of index $j$, and said at least three terms comprise the initial term of the finite arithmetic progression of index $j$, and the final term of the finite arithmetic progression of index $j$. All the embodiments discussed with reference to the insertion of a single reference signal pattern are applicable to the insertion of one reference signal pattern belonging to a sequence of refence signal patterns.

According to various embodiments:

- the reference signal patterns may differ only from the initial term of the arithmetic progression. Stated otherwise, a similar pattern can be repeated with different positions of the first reference signal ;

- other parameters than the initial term of the arithmetic progression may vary. Thus, the reference signal patterns of the sequence may be used to discover for example different parts of a long-term channel characteristic.

In order to identify the parameters that relate to each pattern, each parameter relating to a reference signal pattern of index $j$ in the sequence of reference signal patterns will be denoted by a subscript $j$.

The sequence of patterns Seq can be for example defined by patterns $Pat_j$ , that may be associated with some or all of the parameters listed below:

- $j$ is the index of the reference signal pattern in the sequence of reference signal patterns ;

- $L_j$ is the length of a sparse ruler associated with the reference signal pattern of index $j$,

- $m_j$ is the cardinality of the proper subset of a finite arithmetic progression/ the number of marks of the sparse ruler associated with the reference signal pattern of index $j$ / the number of positions of reference signals inserted according to the pattern $Pat_j$, ;

- $A_j$ is the initial term of the finite arithmetic progression / the position offset associated with the reference signal pattern

Pat$_j$ of index $j$;

- $k_j$ is the common difference of the finite arithmetic progression / the multiplier coefficient associated with the reference signal pattern of index $j$.

- for a given index $j$, $\{a_i^j, i = 1 \ldots m_j\}$ are the marks a sparse ruler of length $L_j$ with a number $m_j$ of marks. The marks of the sparse ruler depend upon the length $L_j$ and the number $m_j$ of marks, but the sparse ruler Is not completely defined by $L_j$ and $m_j$. A sparser ruler is however completely defined by the marks. For example, the ruler Rul7 represented in figure 7 is not the only sparse ruler having $L_j$ = 6 and $m_j$ = 4, but the only one having the marks $\{a_1^j = 0; a_2^j = 1; a_3^j = 4; a_4^j = 6\}$ . ;

- for a given index $j$, $\{p_i^j, i = 1 \ldots m_j\}$ are the $m_j$ positions of the reference signals inserted according to the reference signal pattern Pat$_j$ of index j.

More generally:

- The parameters $L_j, m_j, A_j, k_j$ may be the same or different between reference signal patterns of the sequence, but each reference signal pattern Pat$_j$ belonging to the sequence of reference signal patterns comprises $m_j$ positions $\{p_i^j, i = 1 \ldots m_j\}$ that are distinct from the positions of the other reference signal patterns of the sequence of reference signal patterns ;

- if the positions are defined using sparse rulers, each reference signal pattern Pat$_j$ belonging to the sequence of reference signal patterns is associated to $m_j$ marks of sparse ruler $\{a_i^j, i = 1 \ldots m_j\}$. The marks of sparse ruler $\{a_i^j, i = 1 \ldots m_j\}$ may be distinct from the marks of sparse rulers associated with the other reference signal patterns of the sequence of reference signal patterns. Conversely, the marks of sparse ruler $\{a_i^j, i = 1 \ldots m_j\}$ may be the same than the marks of sparse rulers associated with some or all of the other reference signal patterns of the sequence of reference signal patterns.

It is worth noting that the sequence of reference signal patterns may comprise repetitions of a same reference signal pattern, if the only difference between two (or more) patterns of the sequence is the initial term of the finite progression $A_j$. In such case the positions defined by a pattern are obtained by adding an offset to the position of another pattern of the repetition. For example, a pattern built from the ruler Rul5 and the same parameter $k_j$ may be inserted at two or more different positions by varying only the value of $A_j$. In this case, the patterns will be associated with the same marks of sparse rulers $\{a_i^j, i = 1 \ldots m_j\}$, but different positions $\{p_i^j, i = 1 \ldots m_j\}$, as the values of $A_j$ are distinct.

The sequence of reference signal patterns may also comprise different insertion patterns. For example, a sequence may contain both patterns built based on the ruler Rul5 and Rul6. In this case, the positions $\{p_i^j, i = 1 \ldots m_j\}$ are still different between the reference signal patterns, but other parameters are also different. In the example of Rul5 and Rul6, a same length $L_j$ = 11 is used, but $m_j$ is different ( $m_j$ = 4 for Rul5; $m_j$ = 5 for Rul6). Of course, the marks of sparse rulers $\{a_i^j, i = 1 \ldots m_j\}$ are also different between the two.

Of course, a combination of the two options is possible, with sequences of reference signal patterns that comprise in a plurality of different patterns, including at least two repetitions of one of the patterns.

Using different possible values of these parameters allow relying on different distances between reference signals. For example, it allows discovering different elements of the long-term characteristics of the transmission channel. For example, it allows discovering different parts of the autocorrelation of the phase noise.

In an embodiment, for each index j except the first index of the index set of the finite sequence of reference signal patterns, the initial term of the finite arithmetic progression of said index of the reference signal pattern in said sequence of finite arithmetic progressions is strictly superior to the final term of the immediately preceding finite arithmetic progression in said sequence of finite arithmetic progressions.

The expression "each index j except the first index of the index set of the finite sequence of reference signal patterns" designates each index that is not the first one in the index set of the finite sequence of RS. For example, if the index set is such that $j \varepsilon$ {1, 2, 3, ... nseq}, the expression "each index j except the first index of the index set of the finite

*sequence of reference signal patterns"* designate each index j such that $j \in \{2, 3, ...\ nseq\}$.

Started otherwise, the positions of reference signals inserted according to a pattern start after the last position inserted according to the immediately preceding pattern in the sequence. For example, if the patterns are ordered by index and the positions of the reference signals are defined based on sparse rulers, a pattern of index $j > 1$ in the sequence of reference signal patterns can thus be such that $A_j \geq A_{j-1} + k_{j-1}L_{j-1} + 1$, where:

- $A_j$ is the initial term of the arithmetic progression of the pattern of index $j$ in the sequence of reference signal patterns, which is also the position of the first sample of the pattern of index $j$ ;

- $A_{j-1}$ is the initial term of the arithmetic progression of the pattern of index $j - 1$ in the sequence of reference signal patterns, which is also the position of the first sample of the pattern of index $j - 1$;

- $k_{j-1}$ is the multiplier coefficient / common difference of the arithmetic progression for the pattern of index $j - 1$ in the sequence of reference signal patterns;

- $L_{j-1}$ is the length of the sparse ruler for the pattern of index $j - 1$ in the sequence of reference signal patterns.

Thus:

- $k_{j-1}L_{j-1}$ is the difference between the position of the first and the last reference signal of the pattern of index $j - 1$ in the sequence of reference signal patterns;

- $A_{j-1} + k_{j-1}L_{j-1}$ is the position of the last reference signal of the pattern of index $j - 1$ in the sequence of reference signal patterns.

This ensures that the position of the first reference signal of the pattern of index $j$ is strictly higher than the position of the first reference signal of the pattern of index $j - 1$. Thus, the insertion of the reference signals of the patterns do not overlap.

The relative positions and lengths of the reference signal patterns belonging to the sequence of reference signal patterns can be defined according to different rules.

For example, the positions and/or length of the patterns can also be defined according to be a multiple of a resource allocation unit. For example, in NR or LTE systems based on OFDM (or DFTsOFDM) the smallest allocation unit in the frequency domain (or in the pre-DFT domain) is an RB consisting in 12 subcarriers. The positions and/or length of the patterns can thus be defined to be a multiple of 12. This eases the implementation because the sequence of patterns can be aligned with the resource allocation units.

For example, at least one of the following can be a multiple of a resource allocation unit, for example a multiple of 12:

- the length of a sparse ruler $L + 1$ ;

- the difference between the initial term and the final term of the finite arithmetic progression plus 1, which is also equal to $k * L +1$: the length of a sparse ruler $L$ multiplied by the multiplier coefficient (or common difference of the arithmetic progression) + 1 ;

- the final term of the finite arithmetic progression plus one $A + k * L$. Start ;

- the initial term of the arithmetic progression A ;

- the difference between the initial terms of two arithmetic progressions of two consecutive reference signal patterns in a sequence of reference signal patterns. The initial terms of the two consecutive reference signal patterns are noted $A_j$ and $A_{j-1}$, and the difference $A_j - A_{j-1}$ between the initial terms represents in practice the difference between the position of the first reference signal of one reference signal pattern, and the position of the first reference signal of the first reference signal of the immediately consecutive reference signal pattern.

In the examples above:

- $L$ represents the length of a sparse ruler used for the definition of the positions of reference signals within a reference signal pattern;

- $k$ represents a multiplier coefficient (or common difference of the arithmetic progression). $L * k$ represents in practice the distance between the first and the last reference signals of a reference signal pattern ;

- $A$ represents a position offset, or initial term of an arithmetic progression and represents in practice the position of the first reference signal of a reference signal pattern ;

- $A_j$ and $A_{j-1}$ represent respectively a position offset, or initial term of an arithmetic progression for a reference signal pattern of index $j$, and for a reference signal pattern of index $j$ - 1. More generally, when a sequence of insertion patterns is considered, the position offsets of the insertion patterns may be noted $A_1, A_2, A_3$, etc.

As explained above, the terms $L, k$ and $A$ are used when a single reference signal pattern is considered. Of course, the same rules may apply to terms $L_j$, $k_j$ and $A_j$ when a sequence of a plurality of reference signal patterns is considered.

As explained above, the parameters of each reference signal pattern, as well as the distances between the positions of the reference signal patterns within a sequence may be defined in different ways. In particular, types of patterns P may be considered. For example, a type of pattern may correspond to a type of sparse ruler, and a pattern may be defined by assigning values to the parameters associated ($A, k, L$ ... ) with the sparse ruler

By means of non-limitative example:

- $L$ and/or $k$ and/or the number of repetitions of a same pattern within a sequence may depend on an allocated number of resources (e.g. allocated bandwidth, number of time-domain chips, number of allocated resources in a delay-Doppler domain etc), such as to adapt the overhead caused by the insertion of reference signals to the available resources for transmission ;

- The number of repetitions of patterns within a sequence and/or length $L$ may depend on a modulation and coding rate:

 o For a fixed (small) L-values, more repetitions are needed in case of robust modulations to filter out the noise, while less repetitions are needed for more fragile modulation coding scheme used in less noisy environments, so as to ensure a target performance ;
 o For a target sequence overhead, for robust modulations more repetitions of smaller length sequences are needed, while for more fragile MCS less repetitions of longer length sequences provide a better estimation quality ;

- In an example, such as the example of figure 11, where the reference signal patterns are switched between a sender and a receiver node:

 o The number of repetitions or the length may depend on a signal received from one or more receiver node:

 ▪ For example reception of a HARQ NACK message will lead to increasing the number of repetitions and/or a parameter of a type of pattern, such as the common difference / multiplier coefficient k, or the initial term A of an arithmetic progression ;
 ▪ For example reception of a HARQ NACK message will lead to switching to an insertion pattern with different parameters ;
 ▪ For example the RS insertion pattern of a message received from one or more receiver node will lead to switching to an insertion pattern with different parameters depending on the parameters of the received ;

 o A sender or receiver node may choose the sequence parameters depending on the parameters of its own previous transmissions (sweeping through different parameter sets in successive transmissions) ;
 o $A_l$ values may vary among different signal blocks (e.g. OFDM symbols, signal frames) to ensure staggering and improve estimation in the case of propagation over fading/selective channels ;

- A sender node of a telecommunication network (User Equipment (UE), relay, gNB etc) may choose to use specific parameters depending on internal computations or assumptions such as:

 o Estimated SNR. For example, more repetitions of denser patterns may be used for low SNR ;
 o L may depend on an estimated channel statistical characteristic such as correlation bandwidth or correlation time or delay spread or Doppler spread ;
 o When the target is estimation of a parametric model (e.g. an autocorrelation function with parameters as in figure 14 or some piecewise linear function with a known number of segments), L value (or values for insertion patterns composed based on 2 or more different patterns) and/or the number of repetitions of patters may depend on the parametric model. The number of repetitions may also on the number of segments in a piecewise linear model of the target to be estimated

o Parameters of the insertion pattern are optimized to minimize an estimated error ;

o Two nodes exchanging information relative to insertion patterns (either through a control channel or by using said patterns in their own transmission) can jointly optimize a common set of parameters, where a same parametric model and a same optimization algorithm is supposed at both nodes ;

- The values of the positions $A_j$ of the first reference signals of the reference signal patterns may be selected to reduce the overall pilot overhead and optimize the estimation performance:

o In the example of the figures 12, 13 and 14 that will be described below, L can be chosen to be largely inferior to the thresholds $Ts_{12}$/ $Ts_{13}$, a pattern can be optionally repeated (by shifting all the positions of a pattern type defined by relative positions of the RS, so that two RS insertion patterns of a sequence of RS insertion patterns differ only by the initial position A) e.g once such as $A_2 + k_2L + 1$ is inferior but close to the threshold once more such as $A_3$-$A_1$ is superior to the threshold. Thus, parameters a and b of a model of the autocorrelation of phase noise can be easily estimated without knowledge of supplementary parameters. For example $A_j$ with j>=1 can be chosen such as different observations of *y(D)* are uncorrelated. In an example $A_j$ may depend on a resource allocation granularity. In another example, $A_j$ may be chosen depending on a correlation bandwidth or a maximum delay spread etc.

◦ In another example, a pattern type defined by relatives positions $\{p'_j , i = 1 \dots m_j\}$ of the RS is repeated with different initial positions $A_j$, the positions of the reference signal inserted according to a repetition of index j being $\left\{p_i^j = A_j + p'_i , i = 1 \dots m_j\right\}$. For example, the relative positions may be defined based on the marks of a sparse ruler and a multiplier coefficient k with $\left\{p'_i = k * a_i , i = 1 \dots m_j\right\}$. The index j has here not been inserted to the marks of the sparse ruler, the multiplier coefficient and the relative positions, because they are in this example the same for all the repetitions of the pattern type The initial positions $A_j$. are such that $A_j = A_1 + j - 1$ with j=2...C with C>=2 is an integer, and C<min(abs($p'_{i'}$ - $p'_{i''}$)) with i' ≠ i" integers for a given ruler. The inequation C<min(abs($p'_i$ - $p'_{i''}$)) means that the number of repetitions C of the pattern type is strictly inferior to the lowest distance between relative positions within the pattern type. Stated otherwise, a number C of repetitions of a same reference signal pattern defined by relative positions of reference signals is performed, where C is sufficiently low so that the chunks of the same size C of reference signal positions do not overlap. Similar chunks of the same size C are thus repeated in an irregular manner according to a sparse ruler. This brings processing advantages at the receiver side enabling e.g. noise reduction by averaging among values in the chunk, or easier synchronization when particular values are inserted in the positions corresponding to a chunk. Figure 10 discussed below provides a concrete example of such a repetition with C=2.

Figure 9 is a first example of a sequence of reference signal patterns according to an embodiment.

The sequence Seq9 is a sequence of 3 reference signal patterns Pat1.9, Pat2.9 and Pat3.9.

In the example of the figure 9, the three reference signal patterns Pat1.9, Pat2.9 and Pat3.9 belong to a same pattern type, where the relative positions of the reference signal are the same in the three patterns. Pat1.9, Pat2.9 and Pat3.9differ only from the position of the first reference signal pattern, which is also the initial term of the finite arithmetic progression that defines the position of the reference signals in each pattern:

- the first reference signal pattern Pat1.9 starts at a position $A_{1.9}$;

- the second reference signal pattern Pat2.9 starts at a position $A_{2.9}$ ;

- the third reference signal pattern Pat3.9 starts at a position $A_{3.9}$.

In the example of figure 9, the relative positions of the reference signals in each of the three reference signal patterns Pat1.9, Pat2.9 and Pat3.9 are all defined based on a same sparse ruler, which is Rul6 (an incomplete Golomb ruler of length 11 and order 5), and a multiplicative coefficient of 1. Thus each of the reference signal patterns Pat19, Pat29 and Pat39 comprise five refence signals having relative positions equal to the marks of the sparse ruler (because the multiplier coefficient is 1): $a_{1.9} = 0$, $a_{2.9} = 1$, $a_{3.9} = 4$, $a_{4.9} = 9$, $a_{5.9} = 11$. Stated otherwise:

- The positions of the reference signals Pat1.9 are $A_{1.9}+ 0$, $A_{1.9} + 1$, $A_{1.9} + 4$, $A_{1.9} + 9$, $A_{1.9} + 11$ ;

- The positions of the reference signals Pat2.9 are $A_{2.9} + 0$, $A_{2.9} + 1$, $A_{2.9} + 4$, $A_{2.9} + 9$, $A_{2.9} + 11$ ;

- The positions of the reference signals Pat3.9 are $A_{3.9} + 0$, $A_{3.9} + 1$, $A_{3.9} + 4$, $A_{3.9} + 9$, $A_{3.9} + 11$.

The figure 9 shows a zoom into the pattern Pat1.9, but in the example the relative positions of the reference signals are the same within the patterns Pat1.9, Pat2.9 and Pat3.9.

This example demonstrates that the position of reference signals can be unambiguously defined according to a sequence of reference signal patterns.

Figure 10 is a second example of a sequence of reference signal patterns according to an embodiment.

In the example of figure 10, a sequence Seq10 of 2 insertion patterns.

The figure 10 represents 24 successive positions in the sequence of signal samples. The positions of insertion of reference signals are represented in light gray, while the position used for data samples are left blank.

In this example, each of the two insertions pattern are based upon the ruler Rul5, and the relative positions of the reference signals within each pattern are defined by an incomplete Golomb ruler of length L=11 and order m=4, with a multiplicative coefficient k = 2. Thus, the marks of the incomplete Golomb ruler are $\{a_1 = 0; a_2 = 2; a_3 = 7; a_4 = 11\}$, and the relative positions of the reference signals within each reference signal pattern are obtained by the formula $p'_i = k * a_i$, leading to the set of relative positions $\{p'_1 = 0; p'_2 = 4; p'_3 = 14; p'_4 = 22\}$.

The first reference signal pattern of the sequence of RS pattern is inserted at an initial position $A_1 = 0$. The positions of the RS signals inserted according to the first RS pattern are thus $\{p_1^1 = 0; p_2^1 = 4; p_3^1 = 14; p_4^1 = 22\}$.

The second reference signal pattern of the sequence of RS pattern is inserted at an initial position $A_2 = 1$. The positions of the RS signals inserted according to the first RS pattern are thus $\{p_1^2 = 1; p_2^2 = 5; p_3^3 = 15; p_4^4 = 23\}$.

Thus, the second reference signal patterns duplicates in practice all the reference signals of the first reference signal pattern by adding one reference signal immediately after each reference signal inserted according to the first reference signal pattern. This example show that C repetitions of the same reference signal pattern with $A_j = A_1 + j - 1$ create chunks of C successive reference signals. In this example C = 2, and the smallest distance between relative positions in the reference signal pattern type is $\min(abs(p'_i, -p'_{i''})) = p'_2 - p'_1 = 4$. The condition $C > \min(abs(p'_i, -p'_{i''}))$ is thus fulfilled and, as shown in the figure 10, the chunks of size C of reference signals do not overlap.

This example demonstrates that the reference signal patterns defined can be inserted according to various embodiments not only in completely different positions, but may also be interleaved. For example, using a sequence of two RS patterns that are similar, but shifted by one position as in the example of figure 10 limits the effect of phase noise to the detection RS signals.

It is now referred to figure 11.

Figure 11 is an example of a method implemented by a sender node according to an embodiment, wherein the sender noted uses successively two distinct reference signal patterns in accordance with signaling exchanged with one or more receiver node.

The sender node may be for example a user terminal, or a base station. In general, the packets are sent by the sender to the receiver through a shared channel between the sender and the receiver.

The method P11 is implemented by a telecommunication device which is a sender node of a wireless communication system.

The method P11 represents a procedure to switch from a first sequence of reference signal patterns Seq1.11 to a second sequence of reference signal pattern Seq2.11, where signaling are exchanges between the sender node and the receiver node. In a specific case, each sequence can comprise a single reference signal pattern, and the procedure switches from a first reference signal patterns to a second reference signal patterns. The signaling may either be sent by the sender node to indicate the RS patterns or sequences of patterns that are used, or by the receiver node to request the use of certain RS patterns or sequences of RS patterns. Thus, the use of signaling allows the sender and the receiver to ensure that the receiver is aware of the exact sequence of reference signal patterns used by the sender. The method represented in figure 11 can be generally referred to as "the procedure". For simplification, in the following the procedure is described as if it was applied to an RS pattern, but it can similarly and more generically be applied to a sequence of RS patterns.

The procedure can be initialized through a first signaling, which may be either a specific signaling (for example a Boolean value in a preliminary step not represented in the figure, or a signaling indicative of the use of Seq1.11 at step S111.

The value of such a Boolean value (or any other signaling to initialize or terminate the process) may be performed through:

- a higher level signaling (RRC). In such case the signaling may be put by the nodes within the shared channel of L1 (PHY) and decoded by L3 (RRC) as a control information of L3 ;

- an existing channel that may be:

  o if the signaling is performed by a Base Station, a PDCCH (control) or PDSCH (shared) channel ;

  o if the signaling is performed by a UE to a BS (base station), a PUCCH (control) or PUSCH (shared) channel ;

  o if the signaling is performed by a UE to another UE, a PSCCH (control), a PSSCH (shared) or a PSFCH (feedback) channel.

Another option may be to use a field dedicated to the procedure (typically a predefined field of one of the channels listed above, that is defined in a communication standard to relate to the procedure), to write descriptors the reference signal patterns that are used in the procedure. For example, the writing of a descriptor of the first sequence of reference signal patterns Seq1.11 both indicates that the procedure is initiated when performed by the sender (or request the initialization of the procedure when performed by a receiver) and defines the first reference signal pattern RS1 to use. As the descriptor is written in a field dedicated to the procedure, it is common ground between the sender and the one or more receiver that the first reference signal pattern is used in the procedure.

Thus, the signaling may comprise more or less information: it may only request the initialization of the procedure or indicate the initialization of the procedure or also describe the first reference signal pattern RS. In other embodiment, the signaling may also more completely describe the procedure, for example by also describing the second reference signal pattern RS2, indicating a time at which a switch will be performed between the two reference signal patterns, etc. Depending upon the amount of information to exchange, the signaling may be performed through a Boolean value, or a more complex field.

A signaling (either from a receiver to the sender, or from the sender to one or more receiver) can be performed in different ways. The following applies both to the signaling to initialize the procedure, and, in a number of embodiments, a further signaling to perform the switch to the second reference signal pattern. It shall be noted that the signaling may belong to the same type or be different.

For example, an explicit signaling can be used, where the sender or a receiver sends an explicit information indicating for example that a switch is to be performed, that a switch has been performed, or describing the pattern that is now used/that is to be used.

For example, the signaling may be performed in a control channel of L1 (for example PUCCH, PDCCH or PSCCH) associated to said shared channel.

Performing signaling in an existing control channel of L1 associated to the shared channel thus eases the control of the switch between reference signals, because specific flags or fields can be defined in a control channel that already exists to control the shared channel. Furthermore, such control channel is, as the shared channel, a channel of L1 (physical layer). Therefore, the decoding of the signaling can be performed directly at the physical layer.

Performing signaling in an existing control channel of L1 associated to the shared channel may either make use of an existing channel or create a new channel specifically for controlling the switch of RS patterns.

In general, such a control channel may receive during the procedure signaling from the sender to the one or more receiver, and/or from a receiver to the sender. When the signaling is performed in a control channel of L1, the signaling may consist in specific fields could be defined in the control channel, such as for example:

- A field for a flag indicating that a receiver would like to start the procedure
- A field for a flag indicating that a receiver would like to change RS pattern
- A field indicating a preferred RS pattern. Such a field may for example be a field that contains an indicator of a RS pattern, one or more parameters of a RS pattern type. Such a field may for example be used by a receiver to request a switching to a specific RS pattern, or by the sender to indicate the RS pattern that is now used ;
- A field for stopping the RS switching
- A field for starting/stopping the RS allocation
- etc.

The signaling may also be performed in a shared channel (for example PUSCH, PDSCH or PSSCH).

The shared channel may be the shared channel where the communication occurs itself. In such case, the signaling may for example be inserted by the sender in the first set of data packet itself.

The signaling may also be performed in a subsequent shared channel of said radiofrequency wireless communication system, different from said shared channel. For example, the subsequent channel may be another existing channel or a subsequent shared channel created for the control of the shared channel where the data packets are sent.

In cases where a shared channel is used (whether the shared channel where the packets are sent, a new shared channel, or an existing subsequent shared channel), the signaling may be inserted in all or a part of a data packet. In that case, only higher layer can interpret the data as a control signaling therefore, it cannot provide explicit an RS pattern because such information is L1-specific and unreadable at L3 (RRC). However, the signaling could be "start" or "stop" the mechanism, or "switch".

The signaling may comprise one or more descriptor of a reference signal pattern to insert that allows unambiguously identifying the pattern to insert. As discussed above, such a descriptor may be sent by a receiver to the sender to request the use of a specific RS pattern, and/or by the sender to one or more receiver to indicate the pattern that is now used. Such a descriptor can thus be used to identify the first RS pattern RS1 at the initialization of the procedure, then to identify the second RS pattern during the switch.

The descriptor may for example be a unique descriptor of the first or the second reference signal pattern, that may for example a unique identifier of the first or the second reference signal pattern, or a complete description of the locations of the RS signals in the packets.

The patterns may also belong to a configurable pattern type. In such case, the descriptor may for example comprise:

- An identifier of the pattern type and one or more parameters of the pattern type ;

- one or more parameter of the pattern type, without identifier of the pattern type, if the pattern type is already known, for example if the first and the second reference signal pattern belong to the same pattern type, or if the pattern type is predefined for all the RS pattern that are or will be used.

For example, the pattern type may define a type of sparse ruler, and the parameters may be parameters such as the initial term of the arithmetic progression A, or a multiplier coefficient (or common difference of the arithmetic progression) k that allows defining the positions according to the marks of the sparse ruler. Thus, each reference signal pattern can be defined using a limited number of parameters. The overhead caused by the transmission of the parameters of the patterns is thus limited.

The method P11 comprises a first step S111 of sending to one or more receiver node, or receiving from said one or more receiver node a first signaling indicating a first reference signal pattern RS1 belonging to a pattern type.

The step S111 thus allows ensuring that the one or more receiver node will be able to correctly interpret the reference signal pattern used by the sender node, because the two nodes are aware of the use of the same first reference signal pattern. Any one of the types of signaling discussed above may be used at step S111.

The method P11 further comprises a second step S112 of obtaining a first sequence of signal samples, by inserting reference signals according to the first reference signal pattern within a first sequence of data samples. This step is similar to the step S111 using the first RS pattern.

The method P11 further comprises a third step S113 of feeding said modulator with signal blocks obtained from said first sequence of signal samples. This step is similar to the step S42, using the output of step S111 where the reference signal samples have been inserted according to the first reference signal pattern.

The method P11 further comprises a fourth step S114 of sending, to one or more receiver nodes, or receiving from said one or more receivers, a second signaling indicating a switch to a second reference signal pattern.

This step is similar to step S111, but provides an indication of the second reference signal pattern rather than the first reference signal pattern, and allows performing a switch from the insertion of first reference signal pattern to the insertion of the second reference signal pattern, while both the sender and the one or more receiver being aware of the use of the second reference signal pattern to insert reference signals. Any one of the types of signaling discussed above may be used at step S114.

The method P11 then comprises a fifth step S115 of obtaining a second sequence of signal samples, by inserting reference signals according to the second reference signal pattern within a second sequence of data samples.

The step S115 is similar to the steps S42 and S112, but using the second reference signal insertion pattern.

The method P11 then comprises a sixth step S116 of feeding said modulator with signal blocks obtained from said second sequence of signal samples.

The step S116 is similar to the step S113, but based upon the output of the step S115 where the RS signals have been inserted according to the second reference signal pattern.

The steps of the method P11 thus allow using reference signals according to the first, then the second reference signal patterns. The parameters of the first and the second reference signal patterns can be selected, for example to use different distances between RS signals, in order to discover e.g. different parts of a long-term characteristics of phase noise (for example different parts of an autocorrelation function of the phase noise) or other channel characteristics.

It is worth noting that, even if the method P11 is described with reference to two RS patterns, it can be extended to more than two successive RS patterns. For example, the method can be extended to perform more than one switch: a plurality of successive switches can be performed to switch from the insertion of a first RS pattern to a second pattern, then a third pattern, etc.

In addition, even if the method is described by the insertion of a pattern, this can be more generally understood as the insertion of one or more patterns. For example, the signaling may define the insertion of more than one pattern. They may for example define the insertion of sequences of patterns. Thus, the method may allow switching from a first sequence of patterns to a second sequence of patterns, then possibly a third sequence of patterns, etc.

As noted above, the first and the second reference signal patterns (and optionally further reference signal patterns if more than one switch is performed) may differ from one or more parameter. For example, the reference signal patterns may be associated with a same sparse ruler, but using a different parameter k (e.g a different common difference / multiplier coefficient), so that the different reference signal patterns can be considered as "zoom in" or "zoom out" versions of a same pattern type..

Thus, different spacings of reference signals can be obtained using a limited values of parameters to transmit, since a reference signal pattern of the reference signal pattern type is defined only by the parameter k (and optionally the parameter A).

Figure 12 is first example of an autocorrelation function of phase noise of a wireless communication that can be determined according to an embodiment.

In a number of embodiments of the invention, the analysis of the received data packets where the reference signals have been inserted according to the reference signal patterns according to one or more embodiments allow discovering one or more long term characteristic of a transmission between the sender and the one or more receiver, in particular because the reference signal patterns according to the embodiments comprise different distances between RS signals.

Such long-term characteristics can be, in one example, the statistical properties of the phase noise, or the statistical properties of the nonlinearities stemming from the high-power amplifier, or the statistical properties of the carrier frequency offset, etc.

Such statistical properties can be:

- In one example the autocorrelation of a variable measured in the time domain, or the autocorrelation of a variable measured in the frequency domain, or the power spectral density of a variable, or the mean value of a variable, or the standard deviation of a variable, or the $n^{th}$ moment of a variable.
- In one another example, the coherence bandwidth or a frequency spacing for which the autocorrelation in the frequency domain goes below a predefined value, or the coherence time or a time delay for which the autocorrelation in the time domain goes below a predefined value, or a Boolean value if the mean value goes below a predefined value, or a Boolean value if the standard deviation goes below a predefined value, or a Boolean value if the $n^{th}$ moment goes below a predefined value.

A non limitative list of the possible long term characteristics are provided below:

- phase noise ;

- non-linearities stemming from a high-power amplifier of the sender node ;

- a carrier frequency offset of the radiofrequency wireless communication system ;

- an autocorrelation of a variable measured in the time domain or in the frequency domain;

- an power spectral density of a variable measured in the time domain or in the frequency domain;

- a mean value of a variable measured in the time domain or in the frequency domain;

- a standard deviation of a variable measured in the time domain or in the frequency domain ;

- a $n^{th}$ moment of a variable measured in the time domain or in the frequency domain

The long-term characteristic may more generally be a phase noise temporal coherence indicator representative of a temporal coherence of a phase noise affecting baseband signals obtained from radiofrequency signals received by the receiver. Such phase noise temporal coherence indicator represents the temporal coherence of the phase noise affecting the received baseband signals which, in most cases is introduced mainly by the local oscillators of the receiver. The temporal coherence of the phase noise is typically the measure of the mean correlation between the phase noises introduced at times separated by a given delay, evaluated for different delays (a.k.a. phase noise autocorrelation function). The temporal coherence therefore measures, on the average, how fast the phase noise introduced is expected to vary over time. Depending on the embodiments, a phase noise temporal coherence indicator may correspond to e.g. an estimated phase noise autocorrelation function (or an information derived therefrom such as its initial slope, its floor limit, its average value, etc.), a binary value indicating if the variation of the phase noise is fast or slow, etc. The phase noise temporal coherence indicator may notably be estimated based on a phase noise autocorrelation function of the phase noise of the received signals

The discovery of such a characteristic of the transmission, and notably an autocorrelation function of the RS symbols depending upon their distance. allow selecting the best suited reference signal pattern to insert in the data packets to transmit.

The example of figure 12 provides a first example of an autocorrelation $\gamma(\boldsymbol{p})$ between two phase noise samples, as a function of a distance $p$ between the two samples. The autocorrelation $\gamma(\boldsymbol{p})$ is represented on the vertical axis, and the distance $p$, in number of samples, in the horizontal axis.

Figure 13 is second example of an autocorrelation function of the phase noise of a wireless communication that can be determined according to an embodiment.

The representation of the axis on figure 13 is the same as the representation of the axis in figure 12.

In both figures 12 and 13, the autocorrelation follows an exponential law $\gamma(\boldsymbol{p}) = \boldsymbol{e^{-ap}}$, with $\boldsymbol{a = 0.01}$ in the example of figure 12, with $\boldsymbol{a = 0.002}$ in the example figure 13.

The figures 12 and 13 show that depending upon the characteristics of the sender device, receiver device or the channel, long term characteristics of the transmission, such as for example the law defining the autocorrelation function between two symbols at a given distance, can be different.

Such long-term characteristics have an impact on most relevant RS symbols patterns to use for a given transmission. In the example of figures 12 and 13, it is for example possible to use more sparse pattern in the example of figure 13 than in the example of figure 12, because more distant symbols can be correlated.

Meanwhile, using patterns according to an embodiment, wherein a single comprises RS signals having different spacings allows determining the long-term characteristics of the transmission, for example the law defining the auto-correlation between symbols. Thus, the distances between RS signals of the one or more RS insertion patterns that are used may be defined to discover different parts of the autocorrelation. For example, different spacings between RS of a same pattern allow determining the autocorrelation function at the points defined by the reference signal pattern (i.e the autocorrelation at the distances that can be measured using the reference signals of the signal pattern), which ultimately allows determining the parameter and defining the autocorrelation function. As already mentioned, the RS patterns according to the embodiments define a plurality of spacings between reference signals, while the insertion of the RS signals causes a limited overhead.

For example, in the figure 12, where $\gamma(p) = e^{-ap}$, with $a = 0.01$:

- a small distance between the RS symbols is relevant to discover $\gamma(p)$ for small values of $p$, e.g., for $p \leq 500$. For greater values of $p$, e.g., $p > 500$, though, the discovery could be done with greater distances between RS symbols with the same accuracy. Using greater distances between RS symbols where they allow a reliable estimation (e.g for high values of $p$) dramatically reduce the RS overhead.
- A great distance between the RS symbols is relevant to discover $\gamma(p)$ for great values of $p$, e.g., $p > 500$. For smaller values of $p$, e.g., $p \leq 500$, though, the discovery is not well performed with this same distance because the autocorrelation changes faster.

Thus, in the example of the figure 12, a threshold $Ts_{12}$ corresponding to $p = 500$ can be defined, where some spacings between RS are aimed to discover $\gamma(p)$ above the threshold $Ts_{12}$, and other spacings are aimed to discover $\gamma(p)$ below the threshold $Ts_{12}$ The threshold can for example be selected to separate the parts of the autocorrelation function where different spacings are respectively expected to provide more accurate results. Thus, an accurate estimation of the autocorrelation function can be obtained with a drastically reduced overhead, due to the use of a limited number of RS to obtain a possibly large number of different spacings.

Alternative or in addition, different patterns, that for example are based on the same sparse ruler but with a different multiplier coefficient k, may be used to discover parts of the autocorrelation above and beyond $Ts_{12}$ respectively.

In the figure 13, where a = 0,002, a threshold $Ts_{13}$ can also be defined to separate small and great distances for the discovery of the autocorrelation function and switch RS insertion pattern. However, the threshold $Ts_{13}$ can be set to $p = 2500$ instead of $p = 500$.

It is now referred to figure 14.

Figure 14 is an example of an estimation of an autocorrelation of phase noise in an embodiment of the invention.

As explained above, one of the possible use of the reference signals inserted by a method according to an embodiment is the estimation of a long-term characteristic of the phase noise, for example an autocorrelation of the phase noise of the transmission, based upon the received reference signals.

For example, such an estimation can be performed at the receiver side. Most estimation and/or detection algorithms used in communications rely on the computation of some cross-correlation or auto-correlation function of type

$$\tilde{\gamma}(p_i, p_j) = E\{\gamma(p_i, p_j)\} = E\{x(p_i)y^*(p_j)\},$$

where $y = x$ in the case of the auto-correlation.

For example, Symmetries in space, time, frequency etc domain often exist and usually $\tilde{\gamma}(p_i, p_j) = \tilde{\gamma}(p_i - p_j)$ or even $\tilde{\gamma}(p_i, p_j) = \tilde{\gamma}(|p_i - p_j|)$ e.g. in the case of auto-correlation. The mathematical expectation can be computed e.g. as a mathematical empirical mean. Using reference signals inserted in positions defined by a reference signal pattern according to an embodiment allows having at least an observation $\gamma(p_i, p_j)$ contributing to the estimation of each value $\tilde{\gamma}(D)$ for which a $D = |p_i - p_j|$ can be measured, with insertion of a controlled number of RS.

For example, when the sparse ruler is a perfect Golomb ruler and the multiplicative coefficient $p$ is one, each value $\gamma(D)$ with D=1...L is exposed/observed one single time based on a minimum number of m inserted RS, while y(0) is observed m times.

Inserting again a (same or another) RS pattern A positions away (e.g. if it is the same RS pattern, in positions A+$a_i$) provides a second set of observations $\gamma(D)$ and y(0), but also exposes m observations of $\gamma(A)$ and at least an observation of each value $\gamma(A \mp D)$ for which $a D = |a_i - a_j|$ (the multiplicative coefficient being 1, we have here $a_i = p_i$, and $a_j = p_j$) can be measured with the reference signal pattern. This is particularly convenient for computing autocorrelation functions, who are often decaying and for which a good granularity is needed for y(n) with n small or average and only one or few values are needed for y(n) with n very large. Using such sequences allows to control in a fine manner the number of observations for each lag and to optimize (minimize) the number of inserted pilots that are able of exposing a required/desired number of observations and/or lags.

In the example of figure 14, the autocorrelation function of the phase noise is modeled by a model $\gamma_p = (1 - b)e^{-ap} + b$. The observed autocorrelation of the phase noise depending upon the distance between symbols is represented by the curve Pract14.

The values of the parameters $a$ and b of the model $\gamma_p = (1 - b)e^{-ap} + b$ can thus be determined in order to minimize an error compared to the observation as represented by the curve Pract14. In the example of figure 14, the optimal values area $a = 0,0067$, and b = 0,81. The parameter model of the autocorrelation of phase noise is represented by the curve Mod14. It is worth noting that the pairs of reference signals having low distances are particularly relevant to estimate the left part LMod14 of the model, that corresponds mainly to $(1 - b)e^{-ap}$, while the pairs of reference signals having high distances are particularly relevant to estimate the right part RMod14 of the model, that corresponds mainly to b. This is why a reference signal patterns according to an embodiment, that increase the number of different distances between reference signals, while limiting the number of reference signals and thus the overhead caused by the insertion of the reference signals, are particularly relevant for the estimation of the autocorrelation of phase noise.

This example demonstrates that long-term characteristics, for example the autocorrelation of the phase noise, can be accurately estimated based upon the reference signal pattern according to embodiments of the invention. Furthermore, it shows that the different distances between the reference signals contribute to an estimation of different parameters of the model.

This disclosure is not limited to the method, computer program, and device described here, which are only examples. The invention encompasses every alternative that a person skilled in the art would envisage when reading this text..

**Claims**

1. A method (P4; P5) for inserting reference signals implemented by computer means of a telecommunication device (20; 30), said telecommunication device comprising a modulator, said method comprising:

    - obtaining (S41; S52; S55) a sequence of signal samples, by inserting reference signals according to at least one reference signal pattern within a sequence of data samples ;
    - feeding (S42; S53; S56) said modulator with signal blocks obtained from said sequence of signal samples ;

    wherein:

    - the positions, in said sequence of signal samples, of the reference signals inserted according to each of said at least one reference signal pattern are a proper subset of a finite arithmetic progression ;
    - said proper subset comprises at least three terms of the finite arithmetic progression, said at least three terms comprising the initial term of the finite arithmetic progression, and the final term of the finite arithmetic progression.

**2.** The method of claim 1, wherein the indexes of the terms of the finite arithmetic progression that belong to said proper subset are the marks of a sparse ruler.

**3.** The method of claim 2, wherein said sparse ruler is a complete ruler.

**4.** The method of claim 3, wherein said sparse ruler is a maximal ruler.

**5.** The method of any one of claims 3 or 4, wherein said sparse ruler is a minimal ruler.

**6.** The method of any one of claims 2 to 5, wherein said sparse ruler is a Golomb ruler.

**7.** The method of any of any of the preceding claims, wherein:

- each of said at least one reference signal pattern is such that:

o the proper subset comprises m positions, and m is an integer number such that m $\geq$ 3;
o each of said m positions is identified by an index of the reference signal *i, i* being an integer comprised in an interval [1; ... ; *m*], and each of said m positions is equal to $p_i = A + k * a_i$, wherein:

- *A is* the initial term of the finite arithmetic progression, and a positive integer ;
- $a_i$ is the index in said arithmetic progression of the i$^{th}$ element of said proper subset ;
- *k is* the common difference of the finite arithmetic progression, and a strictly positive integer.

**8.** The method of any one of the preceding claims, wherein:

- reference signals are inserted according to a finite sequence (Seq9; Seq10) of reference signal patterns, said finite sequence of reference signal patterns having an order equal to or higher than 2 ;
- for each index of the reference signal pattern j belonging to the index set of said finite sequence of reference signal patterns, the positions, in said sequence of signal samples, of the reference signals inserted according to the reference signal pattern of said index of the reference signal pattern j in said finite sequence of reference signal patterns are a proper subset of a finite arithmetic progression of said index of the reference signal pattern j in a finite sequence of finite arithmetic progressions.

**9.** The method according to the preceding claim, wherein, for each index of the reference signal pattern j except the first index of the index set of the finite sequence of reference signal patterns, the initial term of the finite arithmetic progression of said index of the reference signal pattern j in said sequence of finite arithmetic progressions is strictly superior to the final term of the immediately preceding finite arithmetic progression in said sequence of finite arithmetic progressions.

**10.** The method of any one of claims 8 or 9, wherein a first finite arithmetic progression belonging to said sequence of finite arithmetic progressions and a second finite arithmetic progression belonging to said sequence of finite arithmetic progressions, said second finite arithmetic progression being distinct from the first arithmetic progression, fulfil one or more of the following conditions :

- the initial term of the first finite arithmetic progression is different from the initial term of the second finite arithmetic progression;
- the common difference of the first finite arithmetic progression is different from the common difference of the second finite arithmetic progression ;
- the difference between the initial term and the final term of the first finite arithmetic progression is different from the difference between the initial term and the final term of the second finite arithmetic progression;
- the cardinality of the proper subset of the first finite arithmetic progression is different from the cardinality of the proper subset of the second finite arithmetic progression.

**11.** The method of any one of the preceding claims, wherein at least one of :

- the difference between the initial term and the final term of the finite arithmetic progression plus one ;
- the final term of the finite arithmetic progression plus one ;
- the initial term of the arithmetic progression ;

- the difference between the initial terms of two arithmetic progressions of two consecutive reference signal patterns ;

is a multiple of a resource allocation unit.

12. The method (P11) of any one of said preceding claims, wherein:

- said telecommunication device is a sender node of a wireless communication system ;
- said method comprises:

o sending to one or more receiver node, or receiving from said one or more receiver node a first signaling indicating a first reference signal pattern belonging to a reference signal pattern type (S111);
∘ obtaining a first sequence of signal samples, by inserting reference signals according to the first reference signal pattern within a first sequence of data samples (S112);
o feeding said modulator with signal blocks obtained from said first sequence of signal samples (S113) ;
o sending, to one or more receiver node, or receiving from said one or more receiver, a second signaling indicating a switch to a second pattern belonging to said reference signal pattern type (S114) ;
∘ obtaining a second sequence of signal samples, by inserting reference signals according to the second reference signal pattern within a second sequence of data samples (S115) ;
o feeding said modulator with signal blocks obtained from said second sequence of signal samples (S116).

13. The method of claim 12, depending upon claim 2, wherein:

- the reference signal patterns belonging to a reference signal pattern type are associated with a same reference sparse ruler ;
- each reference signal patterns belonging to said reference signal pattern type is associated with a unique common difference of finite arithmetic progression.

14. The method of any one of the preceding claims, wherein:

- said modulator is a discrete Fourier transformation spread orthogonal frequency division multiplexing modulator ;
- Discrete Fourier Transformation is applied by said modulator after the insertion of the reference signal ;
- a transformed succession of signal blocks resulting at least from the application of the discrete Fourier transformation to said succession of signal blocks includes transformed signal blocks, each transformed signal block being mapped to active carriers.

15. A telecommunication device (20; 30) adapted to implement a method according to one of claims 1 to 14.

FIG. 1

FIG. 2

FIG. 3

S41 — Obtaining a sequence of signal samples

S42 — Feeding the modulator with signal blocks obtained from the sequence

P4

FIG. 4

**FIG. 5**

FIG. 6

Rul7

$a_{1.7} = 0$ | $a_{2.7} = 1$ | | | $a_{3.7} = 4$ | | $a_{4.7} = 6$

$D_{1.7} = 1$

$D_{2.7} = 2$

$D_{3.7} = 3$

$D_{4.7} = 4$

$D_{5.7} = 5$

$D_{6.7} = 6$

# FIG. 7

Rul8

FIG. 8

$A_{1.9}$

$A_{2.9}$

$A_{3.9}$

Pat1.9    Pat2.9    Pat3.9

Seq9

$a_{1.9} = 0$ | $a_{2.9} = 1$ | $a_{3.9} = 4$ | $a_{4.9} = 9$ | $a_{5.9} = 11$

FIG. 9

Seq10

FIG. 10

EP 4 787 760 A1

S111 — Sending or receiving first signaling

S112 — Obtaining a first sequence of signal samples

S113 — Feeding the modulator with signal blocks obtained from the first sequence

S114 — Sending or receiving second signaling

S115 — Obtaining a second sequence of signal samples

S116 — Feeding the modulator with signal blocks obtained from the second sequence

P11

# FIG. 11

FIG. 12

FIG. 13

FIG. 14

Europäisches
Patentamt
European
Patent Office
Office européen
des brevets

# EUROPEAN SEARCH REPORT

**Application Number**

EP 25 30 5152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/100237 A1 (CHAE HYUKJIN [KR] ET AL) 26 March 2020 (2020-03-26) * paragraph [0153] - paragraph [0168] * * figures 13-17 * ----- | 1-15 | INV. H04L5/00 H04L25/02 H04L27/26 |
| A | OSHIGA OMOTAYO ET AL: "Design of Orthogonal Golomb rulers with applications in wireless localization", 2014 48TH ASILOMAR CONFERENCE ON SIGNALS, SYSTEMS AND COMPUTERS, IEEE, 2 November 2014 (2014-11-02), pages 1497-1501, XP032769414, DOI: 10.1109/ACSSC.2014.7094712 [retrieved on 2015-04-24] ----- | 1-15 | |

**TECHNICAL FIELDS SEARCHED (IPC)**

H04L

The present search report has been drawn up for all claims

| Place of search | Date of completion of the search | Examiner |
|---|---|---|
| Berlin | 3 July 2025 | Chave, Julien |

EPO FORM 1503 03.82 (P04C01)

## ANNEX TO THE EUROPEAN SEARCH REPORT
## ON EUROPEAN PATENT APPLICATION NO.

EP 25 30 5152

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2025

| Patent document cited in search report | Publication date | Patent family member(s) | Publication date |
|---|---|---|---|
| US 2020100237 A1 | 26-03-2020 | US 2020100237 A1 | 26-03-2020 |
| | | WO 2018199599 A1 | 01-11-2018 |

EPO FORM P0459

For more details about this annex : see Official Journal of the European Patent Office, No. 12/82